(19) Europäisches Patentamt / European Patent Office / Office européen des brevets

(11) **EP 1 819 029 A2**

(12) **EUROPEAN PATENT APPLICATION**

(43) Date of publication:
**15.08.2007 Bulletin 2007/33**

(51) Int Cl.:
*H02K 9/20* $^{(2006.01)}$

(21) Application number: **07101648.9**

(22) Date of filing: **02.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.02.2006 JP 2006032155**

(71) Applicant: **Nissan Motor Company Limited Kanagawa-ku Yokohama-shi, Kanagawa 221-0023 (JP)**

(72) Inventors:
• **Ishihara, Yuji**
  **Atsugi-shi Kanagawa 243-0192 (JP)**
• **Shimonosono, Hitoshi**
  **Atsugi-shi Kanagawa 243-0192 (JP)**
• **Shishido, Keiko**
  **Atsugi-shi Kanagawa 243-0192 (JP)**

(74) Representative: **Holmes, Matthew William et al Nissan Motor Manufacturing (UK) Ltd Intellectual Property Department Nissan Technical Centre Europe Cranfield Technology Park Cranfield, Bedfordshire MK43 0DB (GB)**

(54) **Apparatus and method for cooling a heat-generating member**

(57) A cooling apparatus for cooling a heat-generating member includes a cooling flow path, a condenser, a coolant-returning flow path, a first check valve and a second check valve. The cooling flow path is thermally connected to the heat-generating member. The condenser is connected to a downstream portion of the cooling flow path and condenses a coolant contained in the cooling apparatus after the coolant is evaporated in the cooling flow path. The coolant-returning flow path returns the coolant condensed by the condenser to an upstream portion of the cooling flow path. The first check valve is disposed between the coolant-returning flow path and prevents the coolant from flowing in a reverse direction from the cooling flow path to the first coolant-returning flow path. The second check valve is disposed between the condenser and the coolant-returning flow path and prevents the coolant from flowing in a reverse direction from the first coolant-returning flow path to the condenser.

FIG. 5

**Description**

The present invention relates to an apparatus and method for cooling a heat-generating member. Aspects of the invention relate to an apparatus, to a method and to a vehicle

In a drive system for an electric vehicle, an in-wheel drive system having a motor mounted in each tire wheel has been suggested. The in-wheel drive system allows for increased usage of space in the vehicle cabin. In addition, a driving feel that is different from those of conventional vehicles may be obtained as each wheel may be driven individually.

To provide such a drive system, however, it is necessary to reduce the size of each in-wheel motor. However, when the volume of each motor is reduced, the area for dissipating heat generated by power loss is also reduced. Therefore, the operating temperature of the motor is considerably increased and cooling of the motor becomes a critical problem.

As an example of a method for cooling the motor, a liquid cooling method that uses a coolant to cool the motor is known (see, for example, Japanese Unexamined Patent Application Publications Nos. 2004-112967 and 2004-112968).

However, in the above-mentioned liquid cooling method, a pump for circulating the coolant is required in addition to a heat exchanger for cooling the coolant after the temperature thereof is increased by heat generated by the motor. The addition of the pump and heat exchanger undesirably results in a relatively large cooling system. In particular, when the cooling system is used to cool the above-described in-wheel motor, placement of the cooling system in each tire wheel results in significant packaging concerns as space is somewhat limited. Therefore there is a need for a cooling system that reduces packaging concerns.

It is an aim of the invention to address this issue and to improve upon known technology. Other aims and advantages of the invention will become apparent from the following description, claims and drawings.

Aspects of the invention therefore provide an apparatus and a method as claimed in the appended claims.

According to another aspect of the invention there is provided a cooling apparatus for cooling a heat-generating member with a coolant, the cooling apparatus comprising a cooling flow path that is thermally connected to the heat-generating member and that allows the coolant to pass therethrough, a condenser that is connected to a downstream portion of the cooling flow path and that condenses the coolant after the coolant is evaporated in the cooling flow path, a first coolant-returning flow path that returns the coolant condensed by the condenser to an upstream portion of the cooling flow path, a first check valve that is disposed between the first coolant-returning flow path and the cooling flow path and that prevents the coolant from flowing in a reverse direction from the cooling flow path to the first coolant-returning flow path and a second check valve that is disposed between the condenser and the first coolant-returning flow path and that prevents the coolant from flowing in a reverse direction from the first coolant-returning flow path to the condenser.

In an embodiment, the cooling apparatus is disposed in a wheel of a vehicle and the condenser is positioned below the cooling flow path as viewed from the vertical direction of the vehicle.

The apparatus may comprise a first reservoir tank disposed in the first coolant-returning flow path, the first reservoir tank storing at least a portion of the coolant.

In an embodiment, the first reservoir tank has an atmospheric vent hole.

In an embodiment, the first reservoir tank has a capacity to store all of the coolant present in the cooling apparatus.

The apparatus may comprise a second coolant-returning flow path that is connected in parallel with the first coolant-returning flow path and that returns the coolant condensed by the condenser to the upstream portion of the cooling flow path, a second reservoir tank positioned in the second coolant-returning flow path, wherein the second reservoir tank is positioned above the cooling flow path, a three-way valve connected to the condenser by a condenser flow path, wherein the three-way valve selectively switches between the first coolant-returning flow path and the second coolant-returning flow path so as to connect the condenser flow path to the first or second coolant-returning flow paths, respectively, under predetermined conditions, an on-off valve provided in the second coolant-returning flow path at a position downstream of the second reservoir tank, a temperature detector for detecting a temperature in the cooling flow path and a controller that selectively switches the three-way valve to connect the condenser flow path to the first coolant-returning flow path and opens the on-off valve when the temperature detected by the temperature detector is equal to or higher than a preset temperature, and closes the on-off valve when the temperature detected by the temperature detector is lower than the set temperature.

The apparatus may comprise a liquid-level detector for detecting a liquid level in the second reservoir tank wherein, when the temperature detected by the temperature detector is lower than the preset temperature, the controller selectively switches the three-way valve to connect the condenser to the second coolant-returning flow path if the liquid level detected by the liquid-level detector is lower than a predetermined level and selectively switches the three-way valve to the first coolant-returning flow path if the liquid level detected by the liquid-level detector is equal to or higher than the predetermined level.

In an embodiment, the apparatus a liquid-coolant supply device that supplies the coolant in the liquid phase to a flow path that is positioned between the condenser and the second check valve.

In an embodiment, the liquid-coolant supply device supplies the coolant in the liquid phase when the coolant in the flow path positioned between the condenser and the second check valve is in the gas phase.

In an embodiment, the liquid-coolant supply device includes an auxiliary cooling flow path that is thermally connected to the heat-generating member and that allows the coolant to pass therethrough, an auxiliary condenser that is connected to a downstream portion of the auxiliary cooling flow path and that condenses the coolant after the coolant is evaporated in the auxiliary cooling flow path, an auxiliary coolant-returning flow path that returns the coolant condensed by the auxiliary condenser to an upstream portion of the auxiliary cooling flow path, a first auxiliary check valve that is disposed between the auxiliary coolant-returning flow path and the auxiliary cooling flow path and that prevents the coolant from flowing in a reverse direction from the auxiliary cooling flow path to the auxiliary coolant-returning flow path, a second auxiliary check valve that is disposed between the auxiliary condenser and the auxiliary coolant-returning flow path and that prevents the coolant from flowing in a reverse direction from the auxiliary coolant-returning flow path to the auxiliary condenser; and a cylinder that is sectioned by a movable piston into a first cylinder chamber and a second cylinder chamber such that the piston is capable of varying volumes of the first and second cylinder chambers, wherein the first cylinder chamber is connected to the auxiliary cooling flow path and the second cylinder chamber is disposed in the auxiliary coolant-returning flow path.

In an embodiment, the auxiliary cooling flow path is connected to and at least partially disposed in the cooling flow path.

The apparatus may comprise a flow path that connects the second cylinder chamber to coolant-returning flow path and a third auxiliary check valve that is disposed therein so as to be positioned between the coolant-returning flow path and the second cylinder chamber.

In an embodiment, the third auxiliary check valve is opened to operatively connect the second cylinder chamber to the coolant-returning flow path when the pressure of the auxiliary flow path is greater than the pressure of the coolant-returning flow path.

The apparatus may comprise a liquid coolant supply path that connects to the liquid-coolant supply device to the coolant-returning flow path and a third check valve disposed in the liquid coolant supply path.

The apparatus may comprise a connection structure that connects the liquid coolant supply path downstream of the third check valve to the coolant-returning flow path such that the connection structure is disposed between the second check valve and the condenser.

In an embodiment, the connection structure further comprises a low density member having a through hole disposed therein that is positioned so as to be co-axial with the coolant-returning flow path.

In an embodiment, the low density member is constructed of a porous material.

In an embodiment, the connection structure further comprises a selectively movable on-off valve, wherein the valve is opened to operatively connect the coolant-returning flow path to the liquid coolant supply path when the coolant in the coolant-returning flow path is in a gas state and wherein the valve is closed when the coolant returning flow path is in a liquid state.

In an embodiment, the on-off valve is constructed of a memory shape material that is responsive to temperature.

According to a further aspect of the invention there is provided a method for cooling a heat-generating member, comprising connecting a condenser to a downstream portion of a cooling flow path that contains coolant, wherein the cooling flow path is thermally connected to a heat-generating member, wherein the condenser condenses the coolant after the coolant is evaporated in the cooling flow path, connecting a downstream portion of the condenser to an upstream portion of the cooling flow path with a coolant-returning flow path and circulating the coolant by alternately opening and closing a first check valve and a second check valve, wherein the first check valve prevents the coolant from flowing in a reverse direction from the cooling flow path to the coolant-returning flow path and the second check valve prevents the coolant from flowing in a reverse direction from the coolant-returning flow path to the condenser.

For example, a cooling apparatus for cooling a heat-generating member includes a cooling flow path, a condenser, a coolant-returning flow path, a first check valve and a second check valve. The cooling flow path is thermally connected to the heat-generating member. The condenser is connected to a downstream portion of the cooling flow path and condenses a coolant contained in the cooling apparatus after the coolant is evaporated in the cooling flow path. The coolant-returning flow path that returns the coolant condensed by the condenser to an upstream portion of the cooling flow path. The first check valve is disposed between the coolant-returning flow path and prevents the coolant from flowing in a reverse direction from the cooling flow path to the first coolant-returning flow path. The second check valve is disposed between the condenser and the coolant-returning flow path and prevents the coolant from flowing in a reverse direction from the first coolant-returning flow path to the condenser.

In such a cooling apparatus, when the coolant in the cooling flow path is not evaporated and the pressure thereof is low; the first check valve opens to supply the coolant to the cooling flow path. When the coolant in the cooling flow path is evaporated by receiving heat from the heat-generating member, high-pressure gaseous coolant moves toward the condenser and the second check valve opens. Accordingly, the coolant condensed by passing through the condenser is returned to the first coolant-returning flow path. At this time, the direction in which the coolant flows is restricted by the first check valve and the second check valve.

Due to the expansion of the coolant in the cooling flow path and the condensation thereof in the condenser, the first check valve and the second check valve open and close with a time difference. This allows the coolant to self-circulate. Therefore, it is not necessary to provide a separate drive source, such as a pump, in the coolant circulation path. As a result, the size and weight of the cooling apparatus may be effectively reduced and the heat-generating member can be efficiently cooled.

Within the scope of this application it is envisaged that the various aspects, embodiments, examples and alternatives presented in the preceding paragraphs, in the claims and/or in the following description may be taken individually or in any combination thereof.

The present invention will now be described, by way of example only, with reference to the accompanying drawings in which:

Fig. 1 is a side view of a rear section of a vehicle, illustrating the manner in which an in-wheel motor including a first embodiment of a cooling apparatus is mounted;

Fig. 2 is a perspective view of a suspension system illustrating the manner in which the in-wheel motor having a cooling apparatus according to the first embodiment is attached to a vehicle body;

Fig. 3 is a sectional view of the in-wheel motor according to the first embodiment;

Fig. 4 is a sectional view of the in-wheel motor of Fig. 3 taken along line IV-IV;

Fig. 5 is a diagram illustrating the manner in which coolant flows in the first embodiment of the cooling apparatus;

Figs. 6A and 6B are graphs illustrating the principle of coolant circulation according to the first embodiment, where Fig. 6A shows a pressure difference between an inlet and an outlet for each of first and second check valves and Fig. 6B shows the amount of flow at the inlet of the first check valves;

Fig. 7 is a diagram illustrating the manner in which coolant flows in a second embodiment of the cooling apparatus;

Fig. 8 is a diagram illustrating the manner in which coolant flows in a third embodiment of the cooling apparatus;

Fig. 9 is a perspective view of a suspension system illustrating the manner in which an in-wheel motor having a cooling apparatus according to a fourth embodiment is attached to the vehicle body;

Fig. 10 is a diagram illustrating the manner in which coolant flows in the fourth embodiment of the cooling apparatus;

Fig. 11 is a flowchart illustrating a valve control process performed by a controller according to the fourth embodiment;

Fig. 12 is a perspective view of a suspension illustrating the manner in which an in-wheel motor including a fifth embodiment of the cooling apparatus is attached to the vehicle body;

Fig. 13 is a sectional view of the motor according to the fifth embodiment;

Fig. 14 is a sectional view of Fig. 13 taken along line XIV-XIV thereof;

Fig. 15 is a diagram showing the manner in which coolant flows in the fifth embodiment of the cooling apparatus;

Figs. 16A and 16B are graphs illustrating the temperature variation as a function of time in a cooling flow path and a flow path, respectively, of the cooling apparatus according to the fifth embodiment;

Fig. 17 is a diagram showing the manner in which coolant flows in a sixth embodiment of the cooling apparatus;

Fig. 18A is an enlarged view of a connection structure that is disposed between flow paths in Fig. 17;

Fig. 18B is a diagram showing the structure of a low-density member viewed in a direction shown by arrow XVIIIB in Fig. 18A; and

Figs. 19A and 19B are enlarged views of an alternative embodiment of the connection structure that is disposed between flow paths in Fig. 17.

While the claims are not limited to the illustrated embodiments, an appreciation of various aspects of the apparatus is best gained through a discussion of various examples thereof. Referring now to the drawings, illustrative embodiments are shown in detail. Although the drawings represent the embodiments, the drawings are not necessarily to scale and certain features may be exaggerated to better illustrate and explain an innovative aspect of an embodiment. Further, the embodiments described herein are not intended to be exhaustive or otherwise limiting or restricting to the precise form and configuration shown in the drawings and disclosed in the following detailed description. Embodiments of the present invention are described in detail by referring to the drawings as follows.

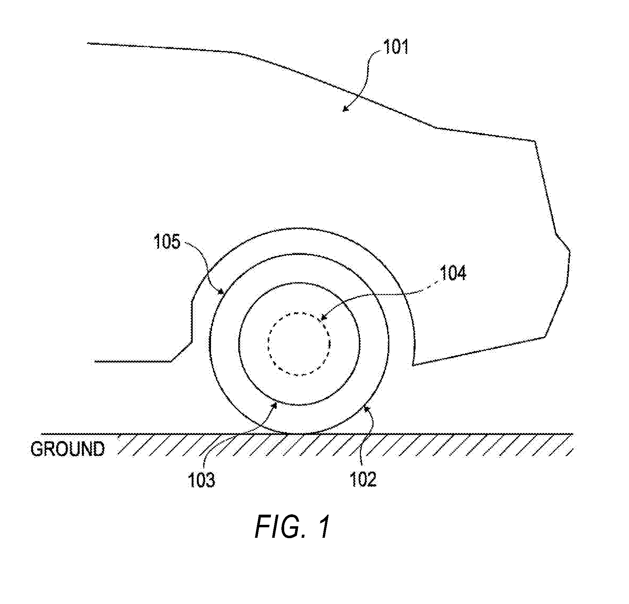

The structure of a first embodiment will be described below. Fig. 1 is a side view of a rear section of a vehicle, illustrating the manner in which an in-wheel motor that includes a cooling apparatus according to a first embodiment is mounted. Fig. 1 depicts a vehicle body 101, a tire 102, a wheel 103, an in-wheel motor 104 (in phantom), and a tire house 105.

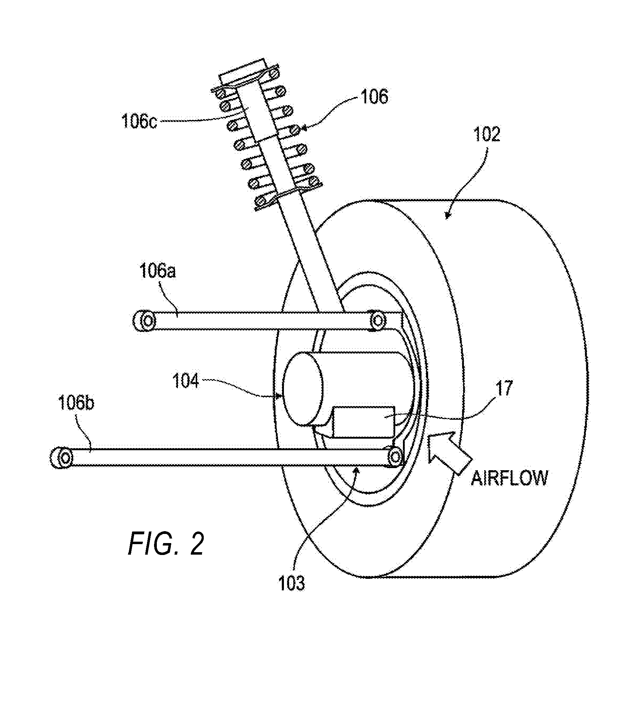

Fig. 2 is a perspective view of a suspension illustrating the manner in which the in-wheel motor 104, according to the first embodiment, attaches to the vehicle body 101. The tire 102 is connected to the vehicle body 101 by a double wishbone suspension 106 including upper and lower arms 106a and 106b and a shock absorber 106c. A housing surface of the in-wheel motor 104 (hereinafter sometimes called simply a motor) on the output side thereof is fixed to an axle (not shown). A condenser 17, which will be described below, is disposed below the in-wheel motor 104 in the generally vertical direction.

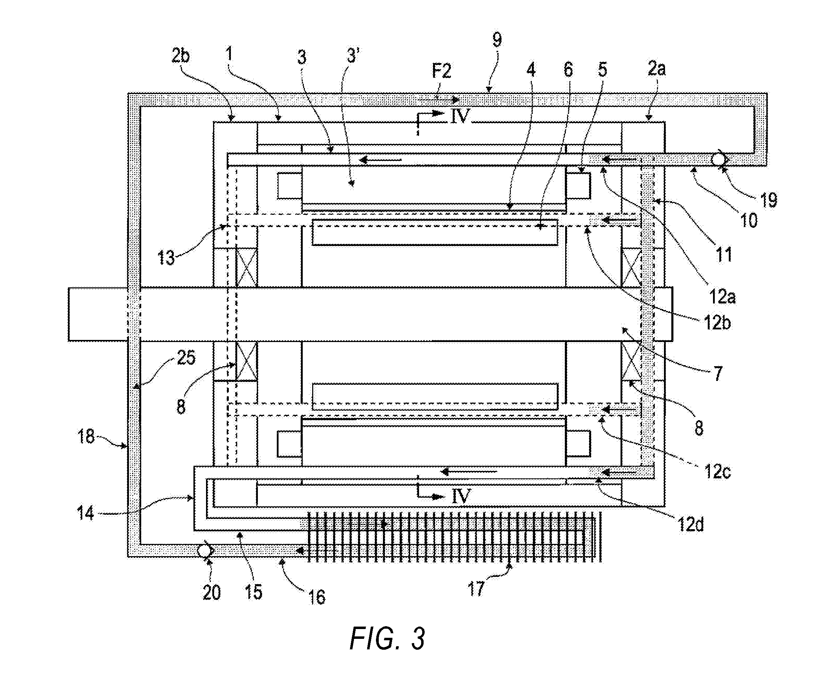

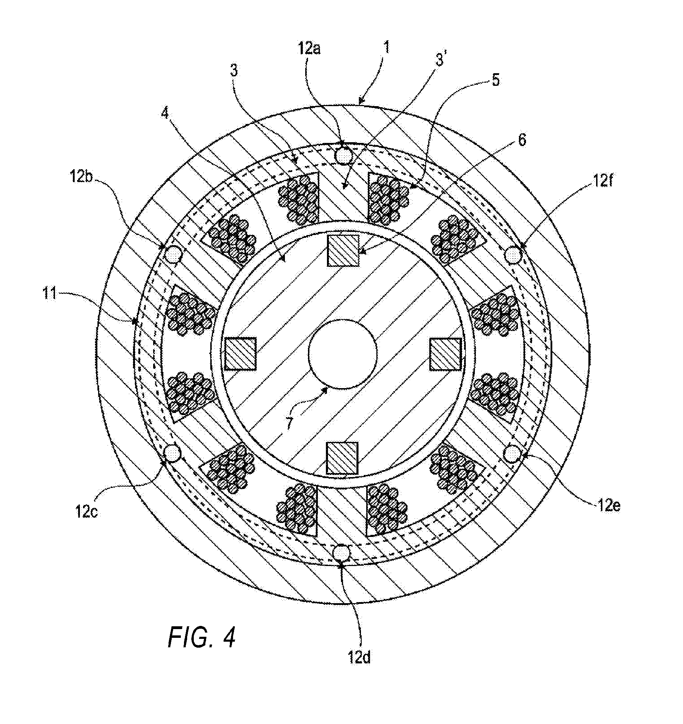

Fig. 3 is a sectional view of the motor 104 according to the first embodiment, and Fig. 4 is a sectional view of Fig. 3 taken along line IV-IV. The motor 104 includes a housing 1, end plates 2a and 2b, a stator (also referred to as a heat-generating member) 3, a rotor 4, a motor shaft 7, and motor bearings 8.

The stator 3 is fixed to the inner peripheral surface of the housing 1. Six stator salient poles 3' are arranged along the inner periphery of the stator 3 with a pitch of approximately 60°. A motor coil 5 is wound around each of the stator salient poles 3'.

The rotor 4 is integrated with the motor shaft 7 and is surrounded by the stator 3 along the outer periphery thereof. The motor shaft 7 is rotatably supported by the motor bearings 8 at both ends thereof, and the motor bearings 8 are respectively fixed on the end plates 2a and 2b. Four rotor magnets 6 that extend in the axial direction of the motor shaft 7 are arranged along the periphery of the rotor 4 with a pitch of approximately 90°.

The structure of the cooling apparatus for the in-wheel motor 104 will now be described. Coolant-returning flow paths 9, 18 are arranged around the housing 1. The coolant-returning flow paths 9, 18 are connected to a flow path 10 via a check valve (also known as the first check valve) 19. The check valve 19 allows the coolant to flow from coolant-returning flow paths (first coolant-returning flow paths) 9, 18 to the flow path 10, but prevents the coolant from flowing in the opposite direction. In other words, the check valve 19 prevents coolant from flowing from the flow path 10 to the coolant-returning flow path 9, 18.

As shown in Figs. 3 and 4, the flow path 10 is connected to six cooling flow paths 12a, 12b, 12c, 12d, 12e, and 12f (hereinafter denoted simply as 12a-12f), which are arranged along the circumference of the stator 3 with a pitch of approximately 60°, via an annular flow path 11 provided in the end plate 2a. The cooling flow paths 12a-12f are connected to a flow path 14 via an annular flow path 13 (shown in phantom in Fig. 3) provided in the end plate 2b. The flow path 14 is connected to a condenser 17 via a flow path 15.

The condenser 17 is positioned below the housing 1 and the cooling flow paths 12a-12f. The condenser 17 is connected to a coolant-returning flow path 18 via a flow path 16 and a check valve (also referred to as a second check valve) 20. The check valve 20 allows the coolant to flow from the flow path 16 to the coolant-returning flow path 18, but prevents the coolant from flowing from the coolant-returning flow path 18 to the flow path 16. Referring to Fig. 3, a pipe having one bend is shown as the condenser 17 for convenience. However, it is understood that the condenser 17 may also be a pipe that includes a plurality of bends. Moreover, it is desirable that the coolant-returning flow paths 9, 18 are constructed of tube which can bend easily (ex. silicon-tube) to improve versatility with respect to placement of the condenser.

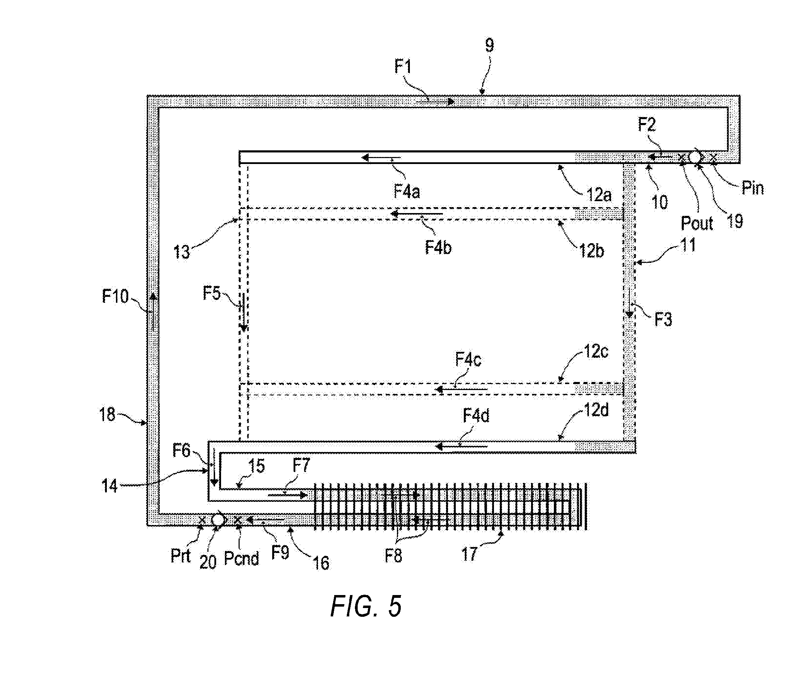

Fig. 5 is a diagram illustrating the manner in which the coolant flows in the cooling apparatus according to the first embodiment. As may be seen in Fig. 5, the coolant flows in the coolant-returning flow path 9 in the direction shown by the arrow designated as a flow F1. The coolant then passes through the check valve 19 to flow in the flow path 10 in the direction shown by the arrow designated as a flow F2. Then, the coolant flows in the flow path 11 shown by the arrow designated as a flow F3.

Once the coolant enters the flow path 11, the coolant is divided into cooling flow paths 12a-12f, and the coolant flows in the directions shown by arrows that are designated as flows F4a-F4f, respectively. The cooling flow paths 12a-12f join together in flow path 13 such that the coolant from cooling flow paths 12a-12f joins together and flows through flow path 13 in the direction shown by the arrow designated as flow F5. Next, the coolant flows into flow path 14 in the direction indicated by the arrow designated as a flow F6 and then into flow path 15 in the direction indicated by the arrow designated as a flow F7. Then, the coolant flows into the condenser 17, as indicated by arrow designated as a flow F8. The coolant exits the condenser 17 and flows into the flow path 16 in the direction of arrow designated as a flow F9. Then, the coolant passes through the check valve 20 and flows into the coolant-returning flow path 18 in the direction indicated by arrow designated as flow F10. The coolant-returning flow path 18 is connected to the coolant-returning flow path 9 such that the coolant is returned back to the flow path 9.

The coolant-circulating operation performed by the cooling apparatus according to the first embodiment will now be described. In Fig. 5, the coolant forming the flow F1 in the coolant-returning flow path 9 is in a liquid phase. If the temperature of the coolant in the cooling flow paths 12a-12f is under the boiling point of the coolant and if the pressures in the cooling flow paths 12a-12f is sufficiently low, the flow F1 in the coolant-returning flow path 9 is permitted to pass through the check valve 19 and forms the flows F2 and F3 in the liquid phase in the flow paths 10 and 11, respectively. The liquid-phase flow F3 is then divided into the flows F4a-F4f in the cooling flow paths 12a-12f, respectively, which are provided in the stator 3.

If the pressures Pin and Pout at opposite sides of the check valve 19 meet the condition where Pin > Pout, the check valve 19 is opened due to the pressure difference (Pin - Pout) and the coolant flows is permitted to flow into the flow paths 12a-12f to form the flows F4a-F4f, respectively. If a large amount of heat is generated due to iron loss and copper loss of the motor 104, the coolant forming the flows F4a-F4f changes from the liquid phase to a gas phase in regions where the cooling flow paths 12a-12f are in the vicinity of heat sources of the stator 3. The phrase "iron loss" is a generic term for power loss that occurs in an iron core and corresponds to the sum of hysteresis loss and eddy-current loss generated in the iron core when an alternating magnetic flux passes through the iron core. The "copper loss" is loss that occurs when a current is converted into heat due to the resistance of electric lines used as coils.

When the coolant in the cooling flow paths 12a-12f changes from the liquid phase to the gas phase, the pressure in the cooling flow paths 12a-12f is increased due to flow resistance, or the like. Thus, the pressure in the cooling flow paths 12a-12f is higher when the coolant is in the gas phase as compared to when the coolant is in the liquid phase. However, since the flow direction of the gas-phase flows F4a-F4f are limited due to the check valve 19, the gas-phase coolant is prevented from flowing in the reverse direction and entering the coolant-returning flow path 9 positioned upstream of the check valve 19.

The coolant evaporated in the stator 3 flows into the flow path 14 without changing phase, thereby forming the gas-phase flows F6 and F7, in that order. Then, the coolant forms the flow F8 in the condenser 17. At this time, due to the pressure increase caused by the evaporation of the coolant in the stator 3, the liquid coolant that exists in the condenser 17, the flow path 16, and the coolant-returning flow path 18 forms the liquid-phase flows F9 and F10. Thus, the coolant passes through the check valve 20 and returns to the coolant-returning flow path 9 against gravity.

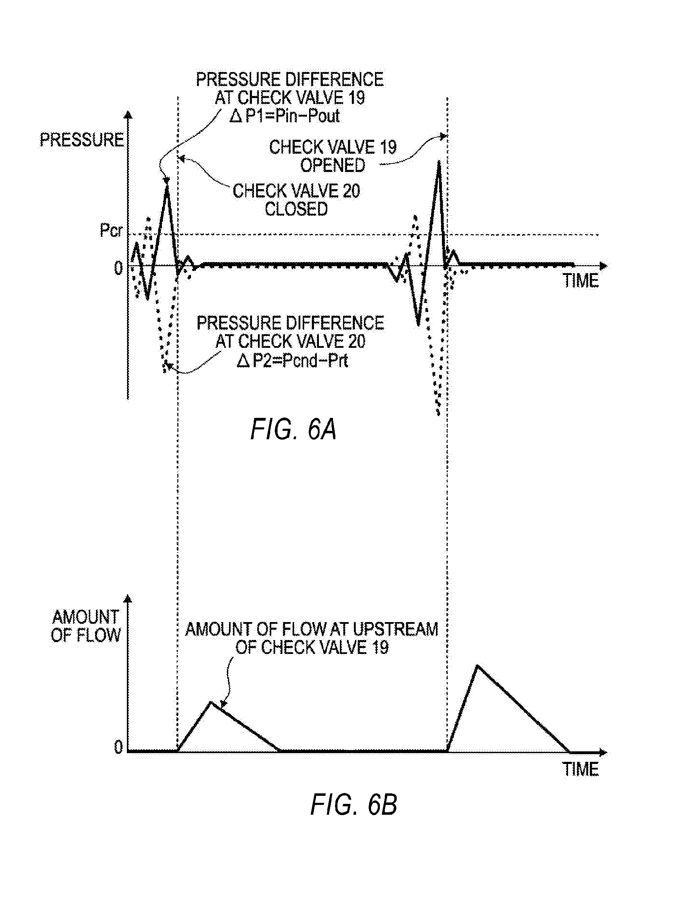

Next, the principle of the coolant circulation performed in the cooling apparatus according to the first embodiment will be described below with reference to experiment results shown in Figs. 6A and 6B.

Fig. 6A is a graph in which the horizontal axis represents time and the vertical axis represents pressure. The values depicted in the graph are obtained by plotting a pressure difference $\Delta P1$ (= Pin - Pout) between the pressures Pin and Pout at positions upstream and downstream, respectively, of the check valve 19 shown in Fig. 5 and a pressure difference $\Delta P2$ (= Pcnd - Prt) between pressures Pcnd and Prt at positions upstream and downstream, respectively, of the check valve 20. Fig. 6B is a graph in which the horizontal axis represents time and the vertical axis represents amount of flow. The values depicted in this graph are obtained by plotting an amount of flow on the upstream side of the check valve 19 (on the side corresponding to Pin).

Referring to Fig. 6A, the waveforms of $\Delta P1$ and $\Delta P2$ have opposite phases. When $\Delta P1$ exceeds a predetermined cracking pressure Pcr of the check valve 19 ($\Delta P1 > Pcr$), the check valve 19 is opened. Here, the cracking pressure Pcr of the check valve 19 is a pressure at which a certain amount of flow is allowed to pass through the check valve 19 from the inlet to the outlet thereof due to the pressure increase at the inlet. When the check valve 19 is opened, the liquid coolant passes through the check valve 19 and flows into the cooling flow paths 12a-12f. At this time, the check valve 20 is closed.

As shown in Fig. 6B, due to the inertial force, the check valve 19 is opened after a certain time (for example, 100 ms in the first embodiment) after the condition $\Delta P1 > Pcr$ is satisfied. Therefore, the liquid coolant starts to pass through the check valve 19 after the certain time after the condition $\Delta P1 > Pcr$ is satisfied. Similarly, due to the inertial force of the check valve 19 and the liquid coolant, the liquid coolant flows through the check valve 19 even after the condition $\Delta P1 < Pcr$ is satisfied. When the condition $\Delta P2 > Pcr$ is satisfied, the check valve 20 is opened and the check valve 19 is closed. Accordingly, the liquid coolant that passes through the check valve 20 is supplied back to the coolant-returning flow path 18.

More specifically, the coolant evaporated in the cooling flow paths 12a-12f is condensed by the condenser 17. Accordingly, the value of pressure Pout obtained at a position downstream of the check valve 19 is in the same order as the value of pressure Pcnd obtained at a position upstream of the check valve 20 after the coolant passes through the cooling flow paths 12a-12f. Thus, the conditions of Pin < Pout and Pcnd > Prt are satisfied.

The states of the flow paths when the conditions of $\Delta P1 > 0$ and $\Delta P2 < 0$ are both satisfied will now be described. When the conditions of $\Delta P1 < 0$ and $\Delta P2 > 0$ are both satisfied, the coolant is evaporated in the cooling flow paths 12a-12f. In this case, the pressure Pout obtained at a position downstream of the check valve 19 and the pressure Pcnd obtained at a position upstream of the check valve 20 after the coolant passes through the cooling flow paths 12a-12f are higher than the pressures Pin and Prt, respectively (Pin < Pout and Pcnd > Prt).

As described above, according to the first embodiment, the check valve 19 is disposed upstream of the cooling flow paths 12a-12f for cooling the stator 3, and the check valve 20 is disposed downstream of the condenser 17. Therefore, due evaporation of the coolant in the cooling flow paths 12a-12f and the condensation thereof in the condenser 17, the condition in which the pressure difference $\Delta P1$ (= Pin - Pout) > Pcr is satisfied and the condition in which the pressure difference $\Delta P2$ (= Pcnd - Prt) > Pcr is satisfied can be obtained with a time difference.

Therefore, the check valve 19 and the check valve 20 can be alternately opened and closed, thereby allowing self-circulation of the coolant. Accordingly, it is not necessary to provide a drive source, such as a pump, in the coolant circulation path. As a result, the size and weight of the cooling apparatus can be reduced and the heat-generating member can be efficiently cooled. In addition, since the unsprung weight of the suspension is reduced, reaction with uneven road surfaces and comfort of the occupant are ensured while the vehicle is running.

Advantages of the cooling apparatus for the in-wheel motor according to the first embodiment will be described below.

The cooling apparatus for cooling the stator 3 of the in-wheel motor 104 with the coolant includes cooling flow paths 12a-12f which are thermally connected to the stator 3 and which allow the coolant to pass therethrough; the condenser 17 which is connected to downstream portions of the cooling flow paths 12a-12f and which condenses the coolant after the coolant is evaporated in the cooling flow paths 12a-12f; the coolant-returning flow paths 18 and 9 for returning the coolant condensed by the condenser 17 to upstream portions of the cooling flow paths 12a-12f; the check valve 19 disposed between the coolant-returning flow path 9 and the cooling flow paths 12a-12f to prevent the coolant from flowing in the reverse direction from the cooling flow paths 12a-12f to the coolant-returning flow path 9; and the check valve 20 disposed between the condenser 17 and the coolant-returning flow path 18 to prevent the coolant from flowing in the reverse direction from the coolant-returning flow path 18 to the condenser 17. The size of the system is reduced as compared to conventional cooling systems by causing the coolant to self-circulate, thereby improving the cooling performance of the coolant. In addition, in the self-circulation system of the coolant, the condenser 17 is positioned below the motor 104 in the vertical direction of the vehicle (and below the cooling flow paths 12a-12f in the vertical direction of the vehicle), as may be seen in Fig. 2. Therefore, the condenser 17 may be cooled by the airflow generated by operation of the vehicle such that high cooling performance may be obtained.

The condenser 17 for condensing the coolant evaporated in the cooling flow paths 12a-12f is positioned downstream of the cooling flow paths 12a-12f which are thermally connected to the stator 3 of the in-wheel motor 104. In addition, a downstream portion of the condenser 17 is connected to the upstream portions of the cooling flow paths 12a-12f by the coolant-returning flow paths 18 and 9. The check valve 19 prevents the coolant from flowing in the reverse direction from the cooling flow paths 12a-12f to the coolant-returning flow path 9, and the check valve 20 prevents the coolant from flowing in the reverse direction from the coolant-returning flow path 18 to the condenser 17. The cooling apparatus of the first embodiment uses a motor-cooling method in which the check valves 19 and 20 are alternately opened and closed using the expansion of the coolant in the cooling flow paths 12a-12f and the condensation of the coolant in the condenser 17. Therefore, the size of the system may be reduced as compared to conventional systems by causing the coolant to self-circulate, thereby improving the cooling performance of the coolant.

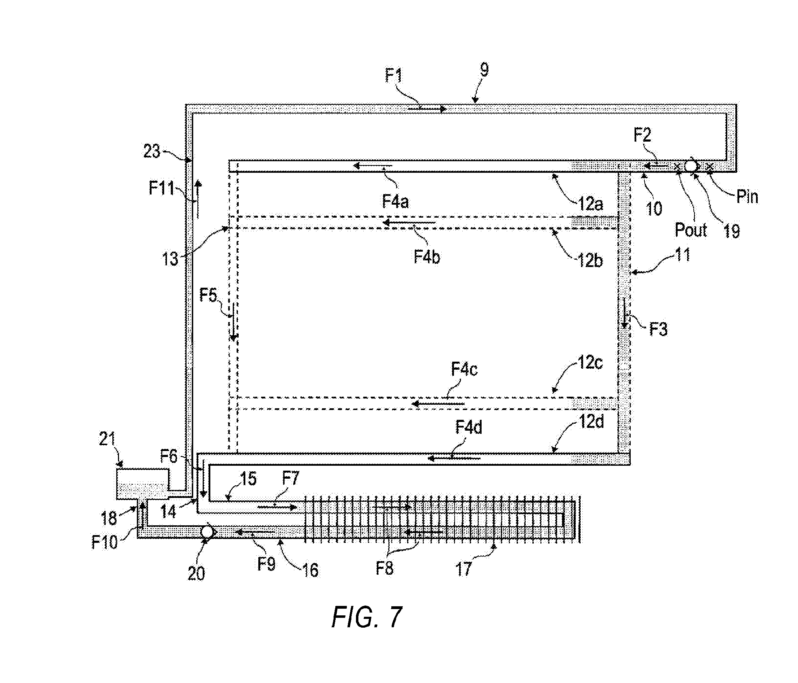

The structure of a second embodiment will now be described with reference to Fig. 7. For convenience, identical elements described above in connection with the first embodiment have been given the same element numbers.

Fig. 7 is a diagram of the second embodiment of the cooling apparatus for a motor illustrating the manner in which the coolant flows therein. In the second embodiment, a reservoir tank (first reservoir tank) 21 is disposed downstream of the coolant-returning flow path 18. The reservoir tank 21 is connected to the coolant-returning flow path 9 via a coolant-returning flow path 23. In Fig. 7, liquid coolant flows in the coolant-returning flow path 23 in the direction illustrated by the arrow that is designated as a flow F11.

In the second embodiment, the reservoir tank 21 is sealed and has no atmospheric vent holes. The reservoir tank 21 is positioned below all of cooling flow paths 12a-12f when viewed from the vertical direction.

In the second embodiment, the reservoir tank 21 and a condenser 17 are positioned below the cooling flow paths 12a-12f. However, similar to the first embodiment, due to the expansion of the coolant in the cooling flow paths 12a-12f and the condensation thereof in the condenser 17, the condition in which the pressure difference $\Delta P1$ (= Pin - Pout) > Pcr is satisfied and the condition in which $\Delta P2$ (= Pcnd - Prt) > Pcr is satisfied may be obtained with a time difference.

Therefore, the coolant may be circulated by a siphon effect without positioning the reservoir tank 21 above the cooling flow paths 12a-12f. Accordingly, the reservoir tank 21 may be placed at any arbitrary position, increasing design layout options.

The reservoir tank 21 according to the second embodiment provides the effect of reducing the coolant temperature as described below. According to the second embodiment, the reservoir tank 21 is provided between the coolant-returning flow path 18 and the coolant-returning flow path 23. Therefore, high-temperature coolant discharged from the condenser 17 can be cooled by being mixed with low-temperature coolant stored in the reservoir tank 21. Accordingly, compared to the structure of the first embodiment, the temperature of the coolant supplied to the cooling flow paths 12a-12f can be reduced, thereby increasing cooling performance.

In addition, pressure variation of the coolant in the coolant-returning flow paths 18, 23, and 9 can be partially absorbed in the reservoir tank 21. Therefore, compared to the first embodiment, it is possible to suppress pressure oscillation in the coolant-returning flow paths 18, 23, and 9, so as to reduce noise caused by the pressure oscillation.

Advantages of the cooling apparatus for the in-wheel motor according to the second embodiment will now be described.

Because the reservoir tank 21 for storing the coolant is provided between the coolant-returning flow path 18 and the coolant-returning flow path 23, the coolant temperature and the pressure oscillation in the cooling flow paths 12a-12f can both be reduced. In addition, as the installation position of the reservoir tank 21 is not limited, the size of the in-wheel motor 104 may advantageously be reduced.

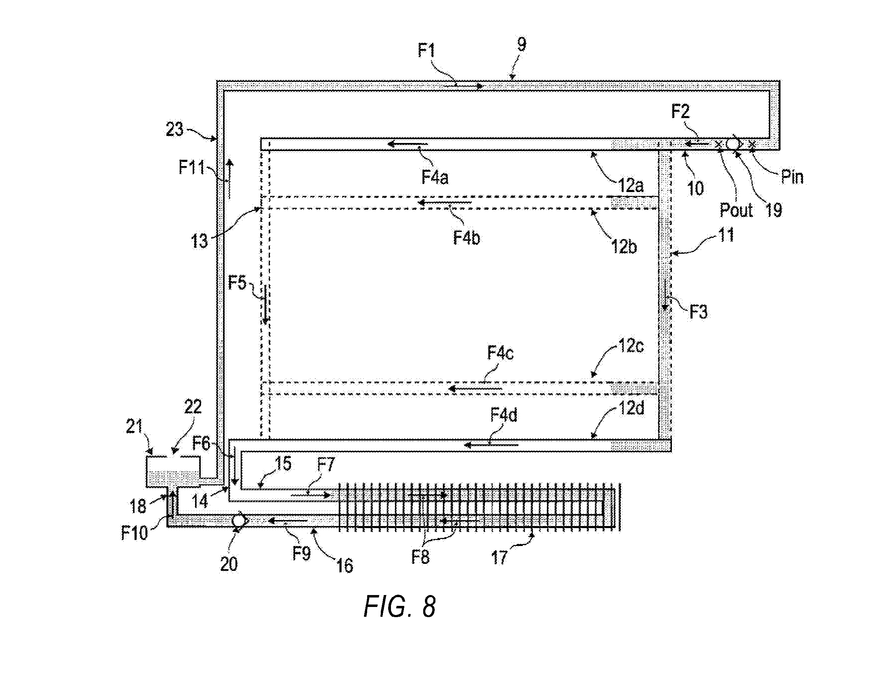

The structure of a third embodiment of a cooling apparatus for a motor 104 will now be described in connection with Fig. 8. For convenience, identical elements described above in connection with the first and second embodiments have been given the same element numbers.

Fig. 8 is a diagram illustrating the manner in which coolant flows in the third embodiment of the cooling apparatus for a motor 104. The structure of the third embodiment differs from the structure of the second embodiment shown in Fig. 7 in that an atmospheric vent hole 22 is formed in a reservoir tank 21. Moreover, in one embodiment it is advantageous if the reservoir tank 21 has a capacity that may accommodate all of the coolant in the cooling apparatus.

According to the third embodiment, the atmospheric vent hole 22 serves to suppress pressure variation. In the third embodiment, because the atmospheric vent hole 22 is formed in the reservoir tank 21, pressure variation in the coolant-returning flow path 18 may be absorbed in the reservoir tank 21 so as to prevent the pressure variation from being transmitted to a coolant-returning flow path 23. In addition, the coolant stored in the reservoir tank 21 can exchange heat with the atmosphere. As a result, compared to the second embodiment in which the reservoir tank is sealed, saturation pressure and temperature in cooling flow paths 12a-12f may be reduced to improve the cooling performance.

Advantages of the cooling apparatus for the in-wheel motor according to the third embodiment will be described below.

Because the atmospheric vent hole 22 is formed in the reservoir tank 21, the coolant temperature and the saturation pressure in the cooling flow paths 12a-12f can both be reduced, thereby improving the cooling performance. In addition, because the installation position of the reservoir tank 21 is not limited, the size of the in-wheel motor 104 may effectively be reduced.

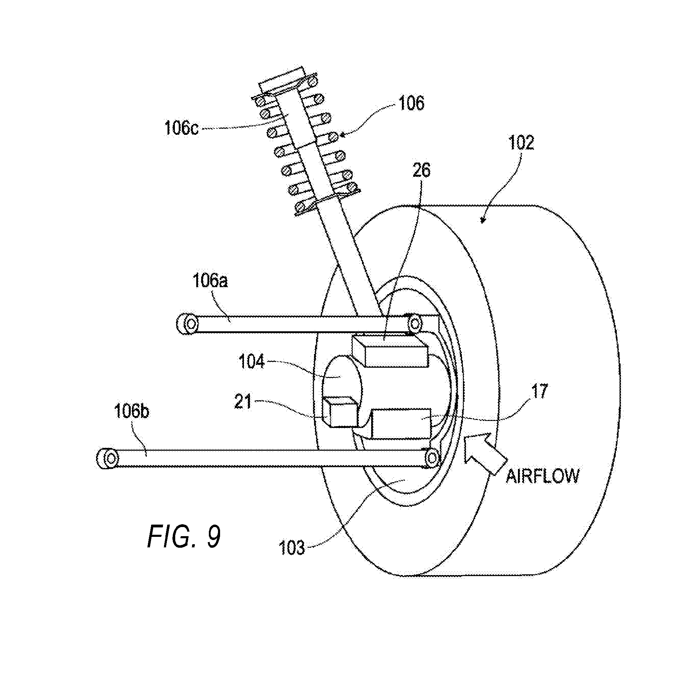

The structure of a fourth embodiment will now be described with reference to Figs. 9-11. Fig. 9 is a perspective view of a wheel illustrating the manner in which an in-wheel motor 104 containing a fourth embodiment of a cooling apparatus is attached to a vehicle body. For convenience, identical elements described above in connection with the first, second and third embodiments have been given the same element numbers. In the fourth embodiment, a reservoir tank (hereinafter called a first reservoir tank) 21 is provided on a side of the motor 104 and a second reservoir tank 26 is provided above the motor 104 as viewed from a vertical direction.

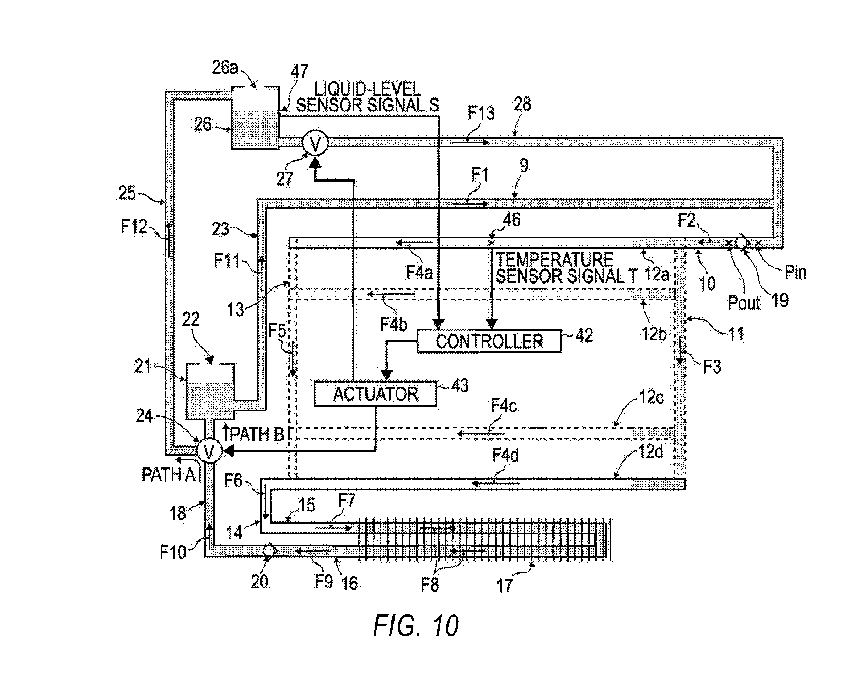

Fig. 10 is a diagram illustrating the manner in which coolant flows in a fourth embodiment of the cooling apparatus for the motor 104. According to the fourth embodiment, a three-way valve 24 is provided downstream of the coolant-returning flow path 18. The three-way valve 24 permits selective connection between coolant-returning flow path 18 and a first coolant-returning flow path 23 (connection path B) and a second coolant-returning flow path 25 (connection path A).

In one specific configuration, referring specifically to Fig. 10, when the three-way valve 24 is closed to the first reservoir tank 21, the liquid coolant flows into the second coolant-returning flow path 25 in the direction designated by the arrow depicting a flow F12. The above-mentioned second reservoir tank 26 is disposed downstream of the second coolant-returning flow path 25. The reservoir tank 26 is positioned above cooling flow paths 12a-12f as viewed from the vertical direction, and includes an atmospheric vent hole 26a. The second reservoir tank 26 is connected to a second coolant-returning flow path 28 disposed downstream of the second reservoir tank 26 via an on-off valve 27. The second coolant-returning flow path 28 is connected to the first coolant-returning flow path 9 at a position upstream of the check valve 19. The liquid coolant flows into the second coolant-returning flow path 28 in the direction designated by the arrow that depicts a flow F13.

In the fourth embodiment, the cooling flow path 12a is provided with a temperature sensor 46 for detecting the coolant temperature therein. In addition, the reservoir tank 26 may be provided with a liquid-level sensor 47 for detecting the liquid level therein. A temperature signal T is output from the temperature sensor 46 and a liquid-level sensor signal S is output from the liquid-level sensor 47 and received by a controller 42. The controller 42 transmits a command signal to an actuator 43 based on the received temperature signal T and liquid-level sensor signal S, thereby controlling the path (A or B) to be connected by the three-way valve 24, as well as the on-off state of the on-off valve 27.

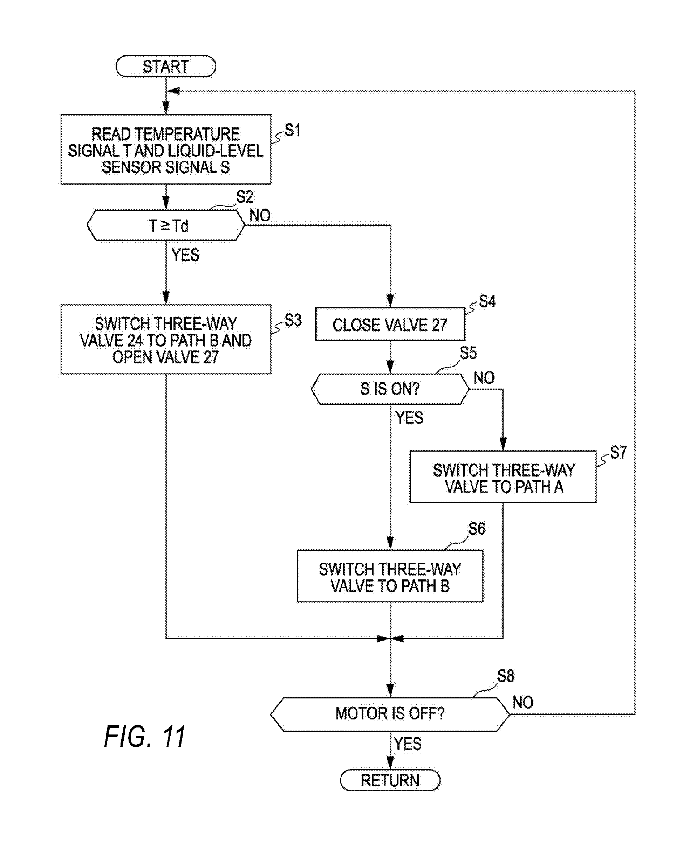

Fig. 11 is a flowchart that illustrates a valve control process performed by the controller 42 in the fourth embodiment. Each step of the control process will now be described. This control process is started when an activation signal that is output by the motor 104 is turned on, and is repeated with a predetermined calculation period.

In Step S1, the controller 42 reads the temperature signal T from the temperature sensor 46 disposed in the cooling flow path 12a and the liquid-level sensor signal S from the liquid-level sensor 47 disposed in the reservoir tank 26. Then, the process proceeds to Step S2.

In Step S2, the detected temperature T is compared with a preset temperature Td and to determine whether or not the detected temperature T is equal to or higher than the preset temperature Td. If the result of the determination is YES, the process proceeds to Step S3. If the result of the determination is NO, the process proceeds to Step S4.

In Step S3, a command signal for switching the three-way valve 24 to the connection path B and opening the on-off valve 27 is output to the actuator 43. Then, the process proceeds to Step S8.

In Step S4, a command signal for closing the on-off valve 27 is output to the actuator 43, and the process then proceeds to Step S5.

In Step S5, a determination is made as to whether the liquid-level sensor signal S is ON. If the result of the determination is YES, the process proceeds to Step S6. If the result of the determination is NO, the process proceeds instead to Step S7. The liquid-level sensor signal S is ON when the liquid-level sensor 47 is in contact with the liquid coolant, and is OFF when the level of the liquid coolant is below the liquid-level sensor 47.

In Step S6, a command signal for switching the three-way valve 24 to the connection path B is output to the actuator 43. Then, the process proceeds to Step S8.

In Step S7, a command signal for switching the three-way valve 24 to the connection path A is output to the actuator 43. Then, the process proceeds to Step S8.

In Step S8, a determination is made as to whether the motor 104 is OFF (stopped). If the result of the determination is YES, the process proceeds to 'RETURN'. If the result of the determination is NO, the process proceeds back to Step S 1.

A valve-controlling operation performed by the controller 42 according to the fourth embodiment will now be described. The preset temperature Td, which is compared with the detected temperature T in Step S2, is set so as to be higher than a saturation temperature Tsat1 in the cooling flow path 12a that is experimentally determined in advance (Td > Tsat1). In addition, the preset temperature Td is set as $Td = \alpha \cdot Tm$ ($\alpha < 1$), where Tm is the allowable temperature of the motor 104..

In the case where $\alpha$ is 0.8, for example, there is a possibility that the cooling flow path 12a will dry out and the motor temperature becomes excessively high when the detected temperature T is equal to or higher than the set temperature Td. However, to account for this situation, referring back to the flowchart shown in Fig. 11, in the fourth embodiment, the process proceeds through Step S1, Step S2, and Step S3, in that order, when the detected temperature T is equal to or higher than the preset temperature Td. Accordingly, the on-off valve 27 is opened. Therefore, the liquid coolant is supplied from the reservoir tank 26, which is positioned above the cooling flow paths 12a-12f when viewed from the vertical direction, to the cooling flow paths 12a-12f via the coolant-returning flow path 28 and the check valve 19 using the elevation head. In addition, the three-way valve 24 is switched to the connection path B, so that the flow F1 in the coolant-returning flow path 9 can be supplied to the cooling flow paths 12a-12f immediately after the flow F13 in the coolant-returning flow path 28 is supplied to the cooling flow paths 12a-12f. As a result, the cooling flow paths 12a-12f are prevented from drying out.

When the detected temperature T is lower than the preset temperature Td, the process proceeds through Steps S1, S2, and S4, in that order. Accordingly, the on-off valve 27 is closed. In addition, if the liquid level in the reservoir tank 26 is high (if the liquid-level sensor signal S is ON) in Step S5, the process proceeds to Step S6 and a circulation system similar to that of the third embodiment is established. If the liquid level is low (if the liquid-level sensor signal S is OFF), the process proceeds to Step S7 and the three-way valve 24 is switched to the connection path A. Accordingly, a sufficient amount of coolant is collected in the reservoir tank 26 to prevent a dry out condition.

As a result, the coolant can be caused to flow through the condenser 17 at a high velocity. Therefore, the dry out condition in which the cooling effect cannot be obtained due to the temperature increase in the cooling flow paths 12a-12f may be prevented. In addition, even when, for example, the vehicle runs on a slope or accelerates and receives a force other than gravity, the coolant may be circulated in the system. Therefore, the temperature in the cooling flow paths 12a-12f may be prevented from being excessively increased and the cooling effect may be ensured.

Advantages of the cooling apparatus for the in-wheel motor according to the fourth embodiment will now be described.

The cooling apparatus according to the fourth embodiment includes first and second coolant-returning flow paths 23, 25, a second reservoir tank 26, a three-way valve 24, an on-off valve 27, a temperature sensor 46, and a controller 42. The second coolant-returning valve is disposed parallel to the first coolant-returning flow path 23. The first and second coolant-returning paths returns the coolant condensed by the condenser 17 to upstream portions of the cooling flow paths 12a-12f.

The second reservoir tank 26 is disposed on the second coolant-returning flow path 25 and above the cooling flow paths 12a-12f when viewed from the vertical direction. The three-way valve 24 that switches between the first and second coolant paths 23 (connection path A) and 25 (connection path B) is operatively connected to the condenser 17. The on-off valve 27 is disposed on the second coolant-returning flow path 28 at a position downstream of the second reservoir tank 26. The temperature sensor 46 for detecting the temperature in the cooling flow path 12a is disposed therein. The controller 42 which switches the three-way valve 24 to the connection path B and opens the on-off valve 27 if the detected temperature is equal to or higher than the preset temperature Td and which closes the on-off valve 27 if the detected temperature is lower than the set temperature Td.

The configuration of the fourth embodiment of the cooling apparatus provides for increased coolant circulation rate to prevent a dry out condition of the cooling flow paths 12a-12f.

In addition, a liquid-level sensor 47 is provided for detecting the liquid level in the second reservoir tank 26. In the case where the detected temperature T is lower than the preset temperature Td, the controller 42 switches the three-way valve 24 to the connection path A if the detected liquid level is lower than a set level and switches the three-way valve 24 to the connection path B if the detected liquid level is equal to or higher than the set level. Therefore, when the possibility that a dry out condition will occur is low, a sufficient amount of coolant can be collected in the reservoir tank 26 to prepare for the risk of a dry out condition.

The cooling effect of the cooling apparatuses according to the first to fourth embodiments may be improved by additionally providing a liquid-coolant supply device for supplying coolant in the liquid phase to the first coolant-returning flow path. Cooling apparatuses having such a device will be described below in the fifth to eighth embodiments. In the following descriptions, for convenience, components similar to those of the first to fourth embodiments are denoted by the same reference numerals.

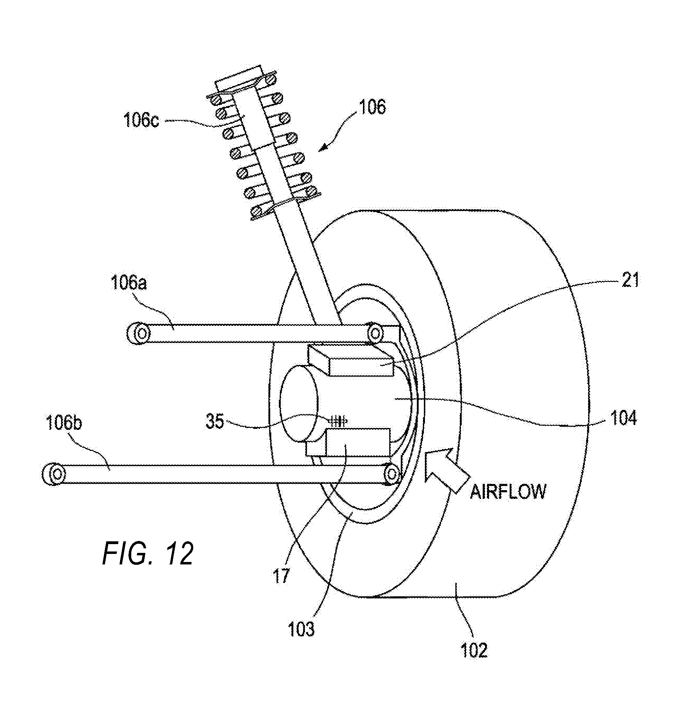

The structure of a fifth embodiment will now be described with reference to Figs. 12-15. Fig. 12 is a perspective view of a wheel 103 having a suspension 106 attached thereto, illustrating the manner in which an in-wheel motor that includes a cooling apparatus according to a fifth embodiment is attached to the vehicle body.

Similar to embodiments 1-4, a tire 102 and a wheel 103 are connected to a vehicle body with a double wishbone suspension 106 including upper and lower arms 106a and 106b and a shock absorber 106c. A housing surface of an in-wheel motor 104 (hereinafter sometimes called simply a motor) on the output side thereof is fixed to an axle (not shown). A reservoir tank (first reservoir tank) 21 is provided above the motor 104 when viewed in the vertical direction. In addition, a first condenser 17 and a second condenser (auxiliary condenser) 35 are provided below the motor 104 and on a side of the motor 104, respectively.

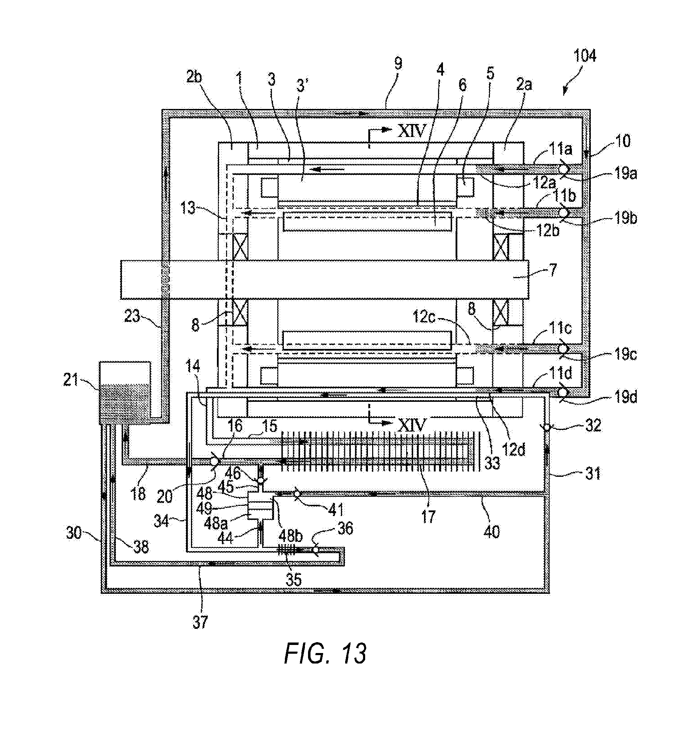

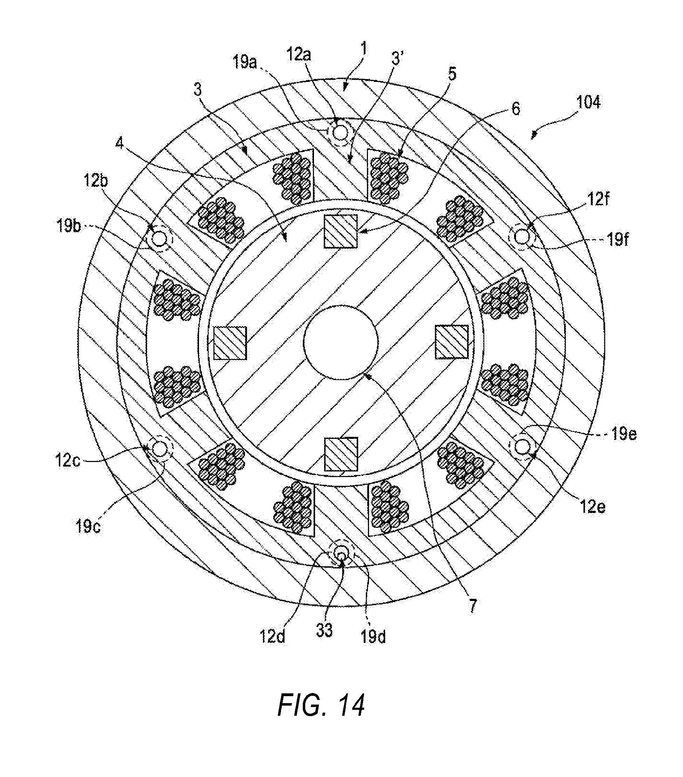

Fig. 13 is a cross-sectional view of the motor 104 according to the fifth embodiment, and Fig. 14 is a cross-sectional view of Fig. 13 taken along line XIV-XIV thereof. The motor 104 includes a housing 1, end plates 2a and 2b, a stator 3, a rotor 4, a motor shaft 7, and motor bearings 8.

The stator 3 is fixed to the inner peripheral surface of the housing 1. Six stator salient poles 3' are arranged equidistance to one another along the inner periphery of the stator 3 with a pitch of approximately 60°. A motor coil 5 is wound around each of the stator salient poles 3'.

The rotor 4 is integrated with the motor shaft 7 and is surrounded by the stator 3 along the outer periphery thereof. The motor shaft 7 is rotatably supported by the motor bearings 8 at both ends thereof, and the motor bearings 8 are respectively fixed on the end plates 2a and 2b. Four rotor magnets 6 that extend in the axial direction of the motor shaft 7 are arranged along the periphery of the rotor 4 with a pitch of approximately 90°.

The structure of the fifth embodiment of the cooling apparatus for the motor 104 will be described below. The cooling apparatus according to the fifth embodiment includes a first piping system and a second piping system.

Referring specifically to Fig. 13, the first piping system includes the reservoir tank 21, coolant-returning flow paths (first coolant-returning flow paths) 9, 10, 18, and 23, check valves (first check valves) 19a-19f, flow paths 11a-11f, cooling flow paths 12a-12f, flow paths 13 and 14, the condenser 17, flow paths 15 and 16, and a check valve (second check valve) 20.

The coolant-returning flow path 9 is connected to the flow paths 11a-11f via the check valves 19a-19f (see also Fig. 14), respectively. The flow paths 11a-11f are respectively connected to the cooling flow paths 12a-12f (see Fig. 14), which are provided in the stator 3. The cooling flow paths 12a-12f provided in the stator 3 are connected to the flow path 14 via an annular flow path 13 provided in the end plate 2b.

The flow path 14 is connected to the condenser 17 via the flow path 15, and the condenser 17 is connected to the coolant-returning flow path 18 via the flow path 16 and the check valve 20. The coolant-returning flow path 18 is connected to the reservoir tank 21, and the reservoir tank 21 is connected to the coolant-returning flow path 9 via the coolant-returning flow path 23. The reservoir tank 21 may be disposed below the lowermost cooling flow path 12d of the cooling flow paths 12a-12f, as viewed from the vertical direction. In addition, the reservoir tank 21 may optionally be vented to the atmosphere (not shown).

The second piping system is provided to improve the cooling performance of the first piping system and serves as a liquid-coolant supply device. The second piping system also includes the reservoir tank 21, a liquid-coolant supply path 30, a flow path 31, a check valve (first auxiliary check valve) 32, an auxiliary cooling flow path 33, a flow path 34, a second condenser (auxiliary condenser) 35, a check valve (second auxiliary check valve) 36, auxiliary coolant-returning flow paths 37 and 38, a liquid-coolant supply path 40, a check valve 41, a cylinder 48, a flow path 44, a flow path 45, and a check valve 46.

The liquid-coolant supply path 30 is connected to the reservoir tank 21, and is branched into the flow path 31 and the liquid-coolant supply path 40. The flow path 31 is connected to the auxiliary cooling flow path 33 via the check valve 32. As shown in Fig. 14, the auxiliary cooling flow path 33 is disposed in the cooling flow path 12d. In other words, the cooling flow path 12d and the auxiliary cooling flow path 33 form a double-cylindrical structure in which the walls thereof are in contact with each other.

The auxiliary cooling flow path 33 extends through the flow path 34, the second condenser 35, the check valve 36, the auxiliary coolant-returning flow path 37, and the auxiliary coolant-returning flow path 38, in that order, and is connected to the reservoir tank 21. The flow path 44 is branched from the flow path 34 at a position upstream of the second condenser 35, and is connected to the cylinder 48 having a piston 49. The cracking pressure of the check valve 36 is set to be higher than the cracking pressure of the check valve 20 included in the first piping system. The "cracking pressure" is a pressure at which a certain amount of flow is allowed to pass through the check valve 36 from the inlet to the outlet thereof due to the pressure increase at the inlet.

The liquid-coolant supply path 40 is connected to the cylinder 48 via the check valve 41. In addition, the liquid-coolant supply path 45 extends from the cylinder 48 and is connected to the flow path 16, which is included in the first piping system, via the check valve 46. The cylinder 48 is sectioned into a first cylinder chamber 48a and a second cylinder chamber 48b by the piston 49. The first cylinder chamber 48a is connected to the flow path 44, and the second cylinder chamber 48b is connected to the liquid-coolant supply paths 40 and 45.

In Fig. 13, a pipe that is bent once is shown as the condenser 17 for convenience. However, it is understood that the condenser 17 may also be a pipe that includes a plurality of bends. Similarly, although a straight pipe is shown as the second condenser 35, the second condenser 35 may also be a pipe that includes one or more bends. In addition, the number and various illustrated positions of the cooling flow paths may be arbitrarily changed in the in-wheel motor.

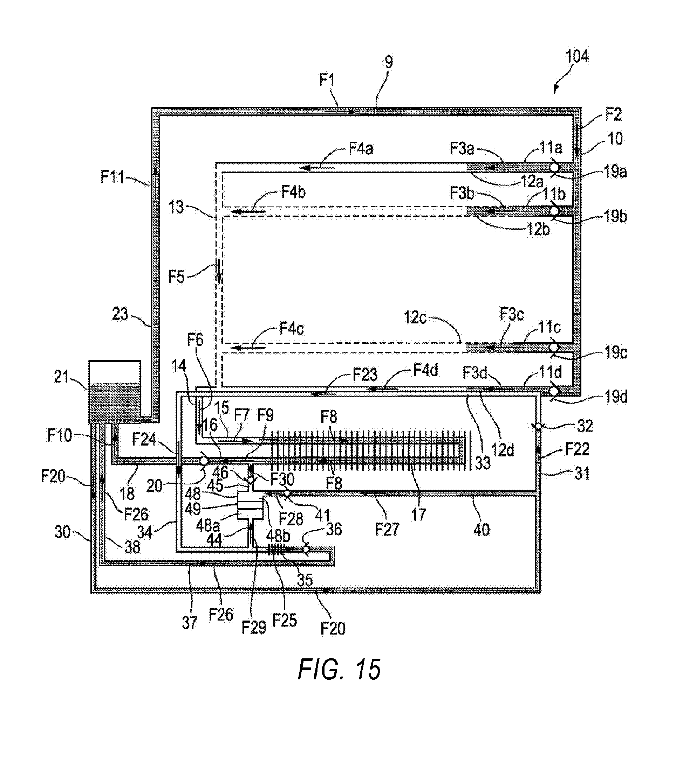

Fig. 15 is a diagram illustrating the manner in which the coolant flows in the fifth embodiment of the cooling apparatus. In the first piping system shown in Fig. 15, the coolant flows into the coolant-returning flow path 9 in the direction designated by the arrow as a flow F1. Then, the coolant flows into the coolant-returning flow path 10 in the direction designated by the arrow as a flow F2, and enters the flow paths 11a-11f through the check valves 19a-19f, respectively. Thus, the flow F2 is divided into flows F3a-F3f in the flow paths 11a-11f, respectively. Next, the coolant flows into the cooling flow paths 12a-12f, respectively, in the directions designated by the arrows as flows F4a-F4f. The flows F4a-F4f join together in the flow path 13 to form a flow F5. Then, the coolant flows into the flow path 14 in the direction designated by the arrow as a flow F6; flows into the flow path 15 in the direction designated by the arrow as a flow F7; flows into the condenser 17 in the direction designated by the arrow as a flow F8; and exits the condenser 17 into the flow path 16 in the direction designated by the arrow as a flow F9. Next, the coolant passes through the second check valve 20, and flows into the coolant-returning flow path 18 in the direction designated by the arrow as a flow F10, and passes through the reservoir tank 21. The coolant exits the reservoir tank 21 and flows into the coolant-returning flow path 23 in the direction designated by the arrow as a flow F11, and returns to the coolant-returning flow path 9.

In the second piping system, also shown in Fig. 15, the coolant flows into the liquid-coolant supply path 30 that is connected to the reservoir tank 21 in the direction designated by the arrow as a flow F20. The flow F20 is divided into flows F22 and F27 in the flow path 31 and the liquid-coolant supply path 40, respectively. The coolant forming the flow F22 passes through the check valve 32 and flows into the auxiliary cooling flow paths 33 and the flow path 34, in the direction designated by the arrows as flows F23 and F24, respectively. The flow F24 is further divided into flows F25 and F29 the travel into the second condenser 35 and the flow path 44, respectively.

The direction of the flow F29 in the flow path 44 changes in accordance with the pressure in the flow path 34. The coolant forming the flow F25 also forms a flow F26 in the auxiliary coolant-returning flow paths 37 and 38 and returns to the reservoir tank 21. The coolant forming the flow F27 that is branched from the flow F20 passes through the check valve 41 and flows into the cylinder 48 in the direction designated by the arrow as a flow F28. The coolant that leaves the cylinder 48 and passes through the check valve 46 forms a flow F30 in the liquid-coolant supply path 45 that is connected to the coolant-returning flow path 16.

The operation of the cooling apparatus according to the fifth embodiment will now be described.

When the motor 104 is off (i.e., not operating), the coolant does not flow in the first piping system shown in Fig. 15. In this state, the flow paths 23, 9, 10, 11a-11f, 12a-12f, 13, 14, 15, 16, and 18; the condenser 17; and the reservoir tank 21 are filled with coolant in the liquid phase.

When the motor 104 is turned on, and a large amount of heat is generated due to iron loss and copper loss in the motor 104, the coolant changes from the liquid phase to the gas phase in regions where the cooling flow paths 12a-12f are in the vicinity of the heat sources of the stator 3. As stated above, the phrase "iron loss" is a generic term for power loss that occurs in an iron core and corresponds to the sum of hysteresis loss and eddy-current loss generated in the iron core when an alternating magnetic flux passes through the iron core. The phrase "copper loss" is defined as a loss that occurs when a current is converted into heat due to the resistance of electric lines used as coils. When the coolant changes from the liquid phase to the gas phase, the pressure in the flow paths is increased as compared to when the coolant is in the liquid phase. This pressure increase is due to the flow resistance or the like. In the fifth embodiment, because the check valves 19a-19f are closed and the check valve 20 is opened, the coolant in the gas phase forms the flows F4a-F4f, F5, F6, and F7, in that order, and reaches the condenser 17.

At this time, due to the pressure increase, the liquid coolant in the flow paths 16 and 18 flows toward the reservoir tank 21 to form the flows F9 and F10, respectively, in that order. Next, the gaseous coolant that flows in the condenser 17 is condensed by the condenser 17. When the gaseous coolant is condensed, the pressure in the flow path of the condenser 17 is reduced.

As a result, the check valves 19a-19f are opened and the check valve 20 is closed, so that the liquid coolant is supplied to the cooling flow paths 12a-12f. Although the elevation head of the reservoir tank 21 is not used, the liquid coolant is supplied from the reservoir tank 21 to the coolant-returning flow paths 23, 9, and 10 to form the flows F11, F1, and F2, respectively, in that order due to a siphon effect. Then, the liquid coolant is supplied to the flow paths 11a-11f via the check valves 19a-19f, respectively, and then to the cooling flow paths 12a-12f.

As described above, the liquid coolant is caused to self-circulate without using power due to evaporation and condensation thereof. Thus, the heat of evaporation is absorbed in the cooling flow paths 12a-12f and heat exchange is performed in the condenser 17 to dissipate heat outside of the motor.

In the in-wheel motor structure, the condenser 17 cannot be installed in the wheel 103 if the condenser 17 is too large. In the fifth embodiment, the second piping system is provided to minimize the size of the condenser 17. Improvement of the cooling performance obtained by the second piping system will now be described.

Consider an example where the condenser area required for situations where a heavy load is placed on the vehicle, such as when the vehicle drives on an upward slope, cannot be provided in the wheel 103. When a heavy load is placed on the vehicle, the coolant cannot be sufficiently condensed by the condenser 17. Therefore, the cooling flow paths 12a-12f, the flow paths 13, 14, and 15, and the condenser 17 are filled with the gaseous coolant and the liquid coolant cannot be supplied. In such a case, the temperature of the cooling flow paths 12a-12f becomes equal to or higher than the saturation temperature of the coolant.

In the fifth embodiment, the structure of the second piping system is similar to that of the first piping system except for the liquid-coolant supply path 40, the flow path 44, the liquid-coolant supply path 45, and the cylinder 48. Accordingly, before the motor 104 is started, the flow paths and the second condenser 35 of the second piping system are filled with the liquid coolant.

When the temperature in the cooling flow path 12d becomes equal to or higher than the saturation temperature of the coolant, the temperature in the auxiliary cooling flow path 33 that is in contact with the cooling flow path 12d also becomes equal to or higher than the saturation temperature of the coolant. Therefore, the coolant in the auxiliary cooling flow path 33 changes from the liquid phase to the gas phase. At this time, in the second piping system, the check valve 32 is closed and the check valve 36 is opened, similar to the first piping system. Accordingly, the gaseous coolant forms the flows F23 and F24, in that order, and reaches the second condenser 35. At this time, due to the pressure increase, the liquid coolant in the auxiliary coolant-returning flow paths 37 and 38 form the flows F25 and F26, in that order, toward the reservoir tank 21.

The gaseous coolant that flows through the condenser 17 is condensed by the second condenser 35. When the gaseous coolant is condensed, the pressure in the flow path of the second condenser 35 is reduced. As a result, the check valve 32 is opened and the check valve 36 is closed. Accordingly, due to the siphon effect, the liquid coolant supplied from the reservoir tank 21 forms the flows F20 and F22 in the liquid-coolant supply path 30 and the flow path 31, respectively, and is supplied to the auxiliary cooling flow path 33 through the check valve 32.

As described above, in the second piping system, the liquid coolant is caused to circulate without using power due to evaporation and condensation thereof, similar to the first piping system. As the coolant is evaporated and condensed, the pressure in the flow path 34 varies. The pressure variation is transmitted to the cylinder 48 via the flow path 44, and accordingly the piston 49 reciprocates. In the fifth embodiment, the cracking pressure at which the check valve 36 starts to open is set to be higher than the cracking pressure of the check valve 20.

In Fig. 15, when the coolant is condensed, the piston 49 moves vertically downward in the cylinder 48. Accordingly, the check valve 41 is opened and the check valve 46 is closed. Thus, the coolant from the reservoir tank 21 forms the liquid-phase flows F20 and F27 in the liquid-coolant supply path 30 and the liquid-coolant supply path 40, respectively, and is supplied to the second cylinder chamber 48b of the cylinder 48.

When the coolant is evaporated, the flow path 16 and the flow path 34 are filled with the gaseous coolant. In this case, since the cracking pressure of the check valve 36 is higher than that of the check valve 20, the pressure in the flow path 34 becomes higher than that in the coolant-returning flow path 16. As a result, the piston 49 moves vertically upward in the cylinder 48, so that the check valve 41 is closed and the check valve 46 is opened. Therefore, the liquid coolant stored in the second cylinder chamber 48b of the cylinder 48 is supplied to the coolant-returning flow path 16.

At this time, if the coolant in the flow path 16 is in the gas phase, the gaseous coolant in the flow path 16 is immediately condensed by the liquid coolant supplied from the liquid-coolant supply path 45. The condensation of the coolant causes a pressure drop, and accordingly the check valve 20 is closed and the check valves 19a-19f are opened. Therefore, the liquid coolant is supplied from the reservoir tank 21 to the cooling flow paths 12a-12f, and thereby reduces the temperature in the cooling flow paths 12a-12f.

Then, if the temperature in the cooling flow paths 12a-12f becomes equal to or higher than the saturation temperature of the coolant again, the above-described cycle is repeated. Accordingly, in the fifth embodiment, the dry out condition in which the temperature in the cooling flow paths 12a-12f is continuously increased can be prevented and the temperature in the cooling flow paths 12a-12f can be maintained close to the saturation temperature of the coolant.

In the structure of the fifth embodiment, the total condenser area can be reduced compared to the structure in which the second piping system is not provided.

First, consider an example in which a four-wheeled vehicle having a total output of 80 kW includes an in-wheel motor for each wheel. The output of each motor is 20 kW, and it is assumed that 10% of the output is wasted in heat loss. Accordingly, heat of 2 kW is removed for each motor. Water is used as the coolant, and a heat exchanger having 4-mm-high fins attached to an 8-mm-diameter cylinder is used as the condenser.

It is assumed that water vapor at 100°C is supplied to an inlet of the condenser, liquid water at 100°C is discharged from the outlet thereof, and the inlet air temperature of the condenser is 40°C. In this case, when the airflow velocity around the condenser is 3 m/s, the required length of the cylinder having the fins is calculated to be 2 m (the front surface area is 320 cm$^2$).

In the structure of the fifth embodiment, it is assumed that liquid water at 40°C is supplied from the cylinder 48 to the flow path 16 at the rate of 20 g/min to condense the water vapor in the flow path 16. In this case, when the latent heat is 2,400 kJ/Kg, the amount of heat that can be removed is calculated as follows:

$$20/1,000 \times 1/60 \times 2,400 = 0.8 \text{ kW}$$

Therefore, the amount of heat to be removed by the condenser 17 is calculated as 2 - 0.8 = 1.2 kW. In this case, the required length of the cylinder having the fins is calculated to be 1.2 m (the front surface area of the condenser is 192 cm$^2$). Thus, the condenser area is reduced to 60% of that in the case where the heat of 2 kW is removed.

The condenser length (area) required in the second piping system is calculated as follows. That is, to push out the liquid water at the rate of 20 g/min by moving the piston 49 in the cylinder 48, water vapor having the same volume as that of 20 g of liquid water is to be supplied from the flow path 44 to the cylinder 48 per minute. When the density of the water is 1,000 kg/m$^3$, the volume of water vapor to be supplied per minute is calculated as 0.02/1,000 = $2 \times 10^{-5}$ m$^3$ = 20 cc. The amount of heat to be removed to condense the water vapor of 20 cc/min is calculated using the latent heat 2,240 kJ/Kg for the saturated water vapor at 107°C and the water vapor density 0.745 Kg/m$^3$, as follows:

$$(2 \times 10^{-5}/60) \times 0.745 \times 2,240 = 5.56 \times 10^{-4} \text{ kW}$$

Accordingly, under the above-described conditions, the required condenser length is calculated to be about 0.5 mm. Therefore, even if the cylinder diameter is reduced to increase the allowance, the condenser length of 1 cm would be enough to achieve the objective.

It is clear from the above-described calculations that the increase in the condenser area caused by the addition of the second condenser 35 of the second piping system is less than 1% of the condenser front surface area 192 cm$^2$ even if the second condenser 35 has the largest expected size.

In addition, in the case in which the reservoir tank 21 is vented to the atmosphere, if the cracking pressure of the check valve 20 is equal to the atmospheric pressure 101 kPa (saturation temperature Tsat1 is 100°C) and the cracking pressure of the check valve 36 is 113 kPa, the saturation temperature of water at 113 kPa is 103°C (Tsat2) and the pressure for causing water to flow from the cylinder 48 to the flow path 16 is 12 kPa, which is sufficiently high. At this time, the temperature in the auxiliary cooling flow path 33 is about 103°C, and therefore the temperature in the flow path 12d is maintained at about 103°C and is prevented from being continuously increased. The temperature in the cooling flow path 12d can, of course, be further reduced by reducing the cracking pressure of the check valve 36.

When, for example, the vehicle runs on an upward slope for 10 minutes, the amount of excess water required in the reservoir tank 21 is calculated as 20 cc/min × 10 min = 200 cc. Therefore, the reservoir tank 21 is required to have a capacity of about 300 cc, and accordingly the size of the reservoir tank 21 can be reduced.

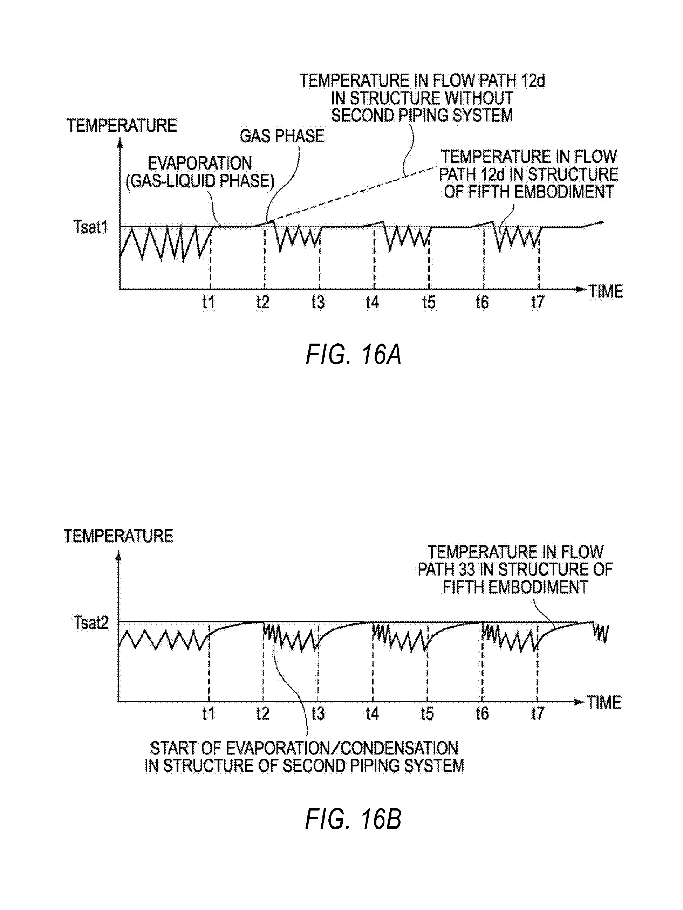

Figs. 16A and 16B are graphs showing the temperature variation with time in the cooling flow path 12d and the flow path 33, respectively, of the cooling apparatus according to the fifth embodiment. As described above, it is assumed that water is supplied to the flow path 16 at 20 cc/min and the condenser area is set to 60% of that required to remove the heat of 2 kW. Figs. 16A and 16B show the results obtained when the vehicle runs on an upward slope.

When a certain time elapses after the vehicle starts to run on an upward slope, it becomes impossible for the condenser 17 of the first piping system to condense the coolant due to the insufficient condenser area. Therefore, the pressure reduction cannot be obtained by the condensation and it becomes impossible to supply the liquid coolant to the cooling flow paths 12a-12f. Accordingly, the coolant in the cooling flow path 12d starts to evaporate and forms a gas-liquid two-phase flow at the time point t1. Then, when the liquid coolant in the flow path 12d is completely evaporated, the temperature in the cooling flow path 12d starts to increase beyond the saturation temperature Tsat1 at the time point t2. In the case in which only the first piping system is provided, the temperature in the flow path 12d is continuously increased, as shown by the dashed line in Fig. 16A. As a result, it becomes impossible for the motor 104 to operate.

In comparison, according to the fifth embodiment, when the temperature in the cooling flow path 12d exceeds the saturation temperature Tsat1 at the time point t1 and reaches Tsat2 at the time point t2, the second piping system starts to operate, as described above. At the same time, the liquid coolant is supplied to the flow path 16 from the cylinder 48. Accordingly, the vapor is condensed in the flow path 16 and the pressure therein is reduced, so that the check valves 19a-19f are opened and the liquid coolant is supplied to the cooling flow paths 12a-12f. Therefore, during a period between the time points t2 and t3, evaporation and condensation are repeated, thereby supplying the liquid coolant to the cooling flow paths 12a-12f. However, the coolant changes completely to the gas phase again at the time point t3 and the temperature is increased beyond Tsat1. Accordingly, the above-described cycle is repeated (periods between the time points t4 and t5 and between the time points t6 and t7).

As described above, in the cooling apparatus for the motor according to the fifth embodiment, the total condenser area can be considerably reduced compared to the case in which the condenser area is determined in accordance with the maximum amount of heat to be removed. In the fifth embodiment, the case in which the in-wheel motor is provided in each of four wheels is considered. However, the in-wheel motor may be provided only in each of two front wheels or in each of two rear wheels. In such a case, the required condenser area is further increased and it becomes more difficult to store each motor in the wheel 103. However, the total condenser area can be considerably reduced by using the cooling apparatus for the motor according to the fifth embodiment, and therefore it becomes possible to store each motor in the wheel 103.

Advantages of the cooling apparatus for the motor according to the fifth embodiment will now be described.

The fifth embodiment of the cooling apparatus for cooling the stator 3 of the in-wheel motor 104 with coolant includes cooling flow paths 12a-12f, the condenser 17, the flow path 16 and the coolant-returning flow paths 18, 23, 9 and 10, the check valves 29a-19f, the check valve 20, and the liquid-coolant supply paths 30, 40, and 45 and the cylinder 48. The cooling flow paths 12a-12f are thermally connected to the stator 3 and allow the coolant to pass therethrough. The condenser 17 is connected to downstream portions of the cooling flow paths 12a-12f and condenses the coolant after the coolant is evaporated in the cooling flow paths 12a-12f. The flow path 16 and the coolant-returning flow paths 18, 23, 9, and 10 return the coolant condensed by the condenser 17 to upstream portions of the cooling flow paths 12a-12f. The check valves 19a-19f respectively disposed between the coolant-returning flow path 10 and the cooling flow paths 12a-12f, prevent the coolant from flowing in the reverse direction from the cooling flow paths 12a-12f to the coolant-returning flow path 10. The check valve 20 is disposed between the condenser 17 and the coolant-returning flow path 18 to prevent the coolant from flowing in the reverse direction from the coolant-returning flow path 18 to the condenser 17. The liquid-coolant supply paths 30, 40, and 45 and the cylinder 48 for supplying the coolant in the liquid phase to the flow path 16 are disposed between the condenser 17 and the check valve 20. With this configuration, self-circulation of the coolant and reduction in the size of the condenser 17 may both be achieved. As a result, the size and weight of the cooling system may be effectively reduced.

In the fifth embodiment, the liquid-coolant supply device immediately supplies the liquid coolant to prevent a dry out condition if the coolant in the flow path 16 is in the gas phase. If the coolant in the flow path 16 is in the liquid phase, the liquid-coolant supply device avoids unnecessary supply of the liquid coolant.

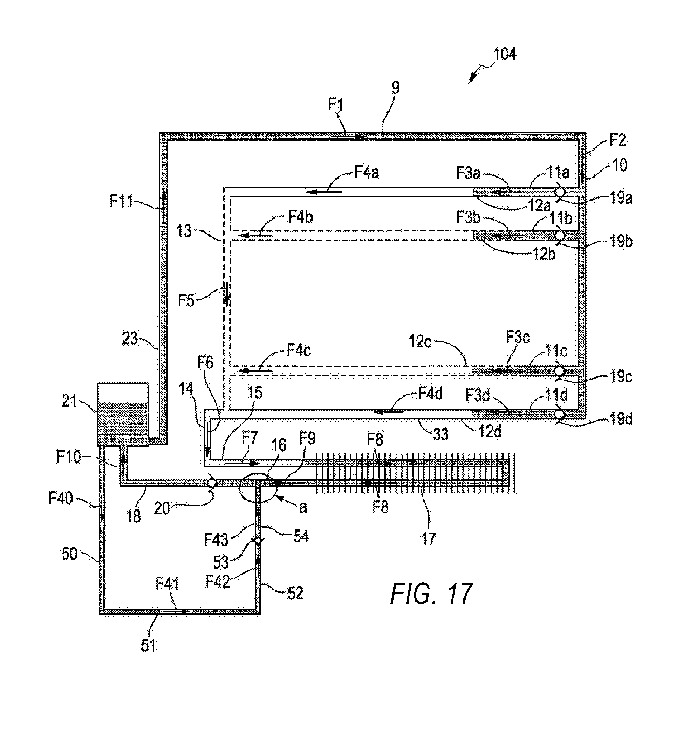

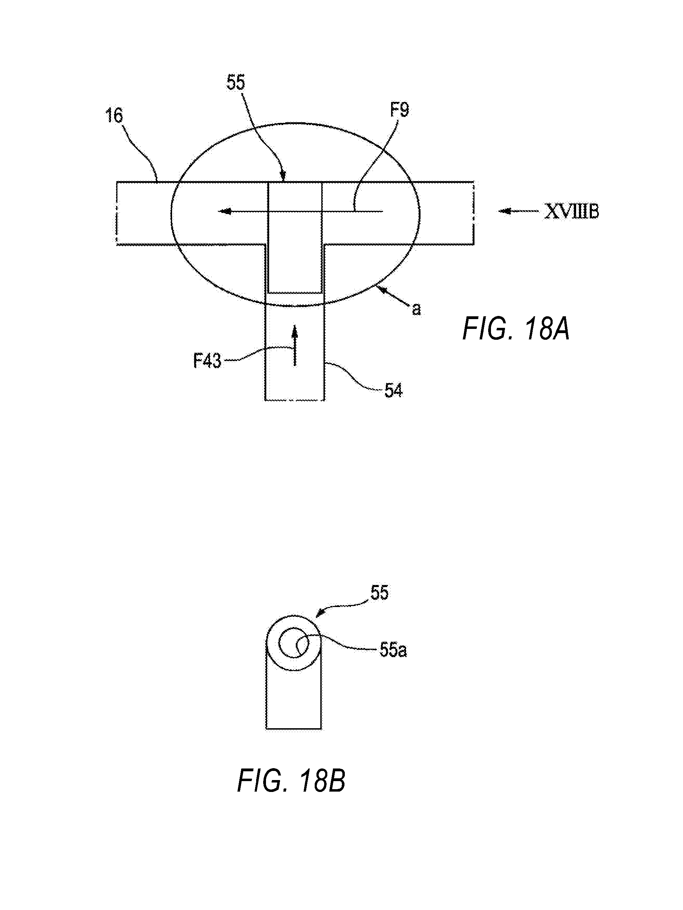

The structure of a sixth embodiment of a cooling apparatus will now be described in connection with Figs. 17, 18A, and 18B. Fig. 17 is a diagram illustrating the manner in which coolant flows in the sixth embodiment of the cooling apparatus. For convenience, identical elements described above in connection with the fifth embodiment have been given the same element numbers. The structure of the sixth embodiment includes a first piping system similar to that shown in Fig. 15. In addition, the sixth embodiment further includes liquid-coolant supply paths 50, 51, and 52, a check valve 53, and a liquid-coolant supply path 54 that are operatively connected to the reservoir tank 21. The liquid-coolant supply path 54 is also connected to the flow path 16.

Fig. 18A is an enlarged view of a connecting structure that is denoted by an 'a' in Fig. 17. Connecting structure a is positioned between the liquid-coolant supply path 54 and the flow path 16. The connecting structure a between the liquid-coolant supply path 54 and the flow path 16 includes a low-density member 55 composed of a porous material, such as a mesh material or the like. The low-density member 55 includes a through hole 55a (as best seen in Fig. 18B) at a position corresponding to the center of the flow path 16. Fig. 18B is a diagram showing the structure of the low-density member 55 viewed in a direction shown by arrow XVIIIB in Fig. 18A.

In the sixth embodiment, a second piping system that serves as a liquid-coolant supply device includes the reservoir tank 21, the liquid-coolant supply paths 50, 51, and 52, the check valve 53, the liquid-coolant supply path 54, and the low-density member 55.

The operation of the cooling apparatus according to the sixth embodiment will now be described. In the sixth embodiment of the cooling apparatus, the low-density member 55 is provided in the connecting structure a between the liquid-coolant supply path 54 and the flow path 16. Accordingly, when the coolant is condensed by the condenser 17 included in the first piping system, which is similar to that described in the fifth embodiment, the pressure in the flow path 16 is set to a negative pressure. Therefore, the liquid coolant forms flows F40, F41, F42, and F43, in that order, and the liquid coolant from the reservoir tank 21 is supplied to the liquid-coolant supply path 54.

When a heavy load is placed on the motor 104 and the coolant cannot be completely condensed by the condenser 17, the coolant in the flow path 16 changes to the gas phase. In this case, a gaseous flow F9 passes through the through hole 55a formed in the low-density member 55. The low-density member 55 continuously contains the liquid coolant by absorbing the liquid coolant existing in the liquid-coolant supply path 54 by surface tension. Therefore, the gaseous coolant forming the flow F9 is condensed by coming into contact with the liquid coolant contained in the liquid low-density member 55. Thus, an effect similar to that of the fifth embodiment may be obtained.

Advantages of the sixth embodiment of the cooling apparatus for the motor 104 will now be described.

A liquid-coolant supply member is provided in the connecting structure a between the coolant-returning flow path 16 and the liquid-coolant supply path 54. The liquid-coolant supply member includes the low-density member 55 having a through hole 55a extending in the direction in which the coolant flows in the coolant-returning flow path 16. Therefore, the coolant in the liquid phase can be supplied to the flow path 16 without using power.

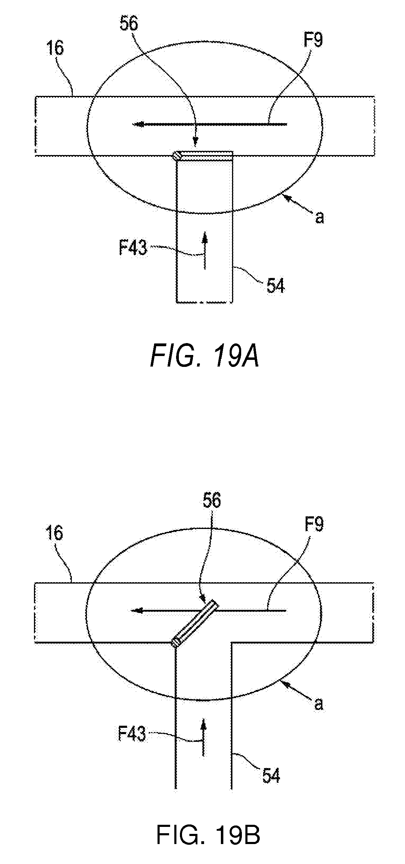

The structure of a seventh embodiment will now be described with reference to Figs. 19A and 19B. Fig. 19A is an enlarged view of an alternative embodiment of a connecting structure a depicted in Fig. 17. As stated above, connecting structure a is disposed between the flow path 54 and the flow path 16.

The structure of the seventh embodiment differs from that of the sixth embodiment in that an on-off valve 56 composed of a shape memory alloy is provided in place of the low-density member 55. When the coolant flow F9 is in the liquid phase, the on-off valve 56 is closed so that the liquid coolant is not supplied from the liquid-coolant supply path 54 to the flow path 16. When the coolant flow F9 is in the gas phase, the on-off valve 56 is opened so that the liquid coolant is supplied from the liquid-coolant supply path 54 to the flow path 16 (as shown in Fig. 19B).

In the seventh embodiment, the second piping system functions as a liquid-coolant supply device and includes the reservoir tank 21, liquid-coolant supply paths 50, 51, and 52, a check valve 53, the liquid-coolant supply path 54, and the on-off valve 56.

The operation of the seventh embodiment will now be described. According to the seventh embodiment, when the coolant flow F9 is evaporated and the temperature thereof is increased, the on-off valve 56 is opened, as shown in Fig. 19B. Thus, the gaseous flow F9 comes into contact with the liquid coolant adhering to the on-off valve 56. Accordingly, the gaseous coolant is condensed. Then, the on-off valve 56 is cooled by the liquid-phase flows F9 and F43 and is closed again, as shown in Fig. 19A. As a result, an effect similar to that of the fifth embodiment may be obtained.

Advantages of the cooling apparatus for the motor according to the seventh embodiment will now be described. A liquid-coolant supply member includes the on-off valve 56 that opens and closes in accordance with the temperature in the flow path 16 between the condenser 17 and the check valve 20. Therefore, the liquid coolant can be supplied to the flow path 16 without using power.

The preceding description has been presented only to illustrate and describe example embodiments of the exhaust system according to the claimed invention. It is not intended to be exhaustive or to limit the invention to any precise form disclosed. It will be understood by those skilled in the art that various changes may be made and equivalents may be substituted for elements thereof without departing from the scope of the invention. In addition, many modifications may be made to adapt a particular situation or material to the teachings of the invention without departing from the essential scope. For example, the cooling apparatus described in the above embodiments may be adapted as to the cooling apparatus for an engine, electrical equipment and any heat-generating member as well as a motor. Therefore, it is intended that the invention not be limited to the particular embodiment disclosed, but that the invention will include all embodiments falling within the scope of the claims. The invention may be practiced otherwise than is specifically explained and illustrated without departing from its scope. The scope of the invention is limited solely by the following claims.

This application claims priority from Japanese Patent Application Serial No. 2006-032155, filed 9th February 2006, the contents of which are expressly incorporated herein by reference.

**Claims**

1. An apparatus for cooling a heat-generating member, the apparatus comprising:

   a cooling flow path thermally connected to the heat-generating member and arranged to allow coolant to pass therethrough;
   a condenser connected to a downstream portion of the cooling flow path and arranged to condense the coolant after evaporation the coolant is evaporated in the cooling flow path;
   a first coolant-returning flow path for returning the coolant condensed by the condenser to an upstream portion of the cooling flow path;
   a first check valve disposed between the first coolant-returning flow path and the cooling flow path and arranged to prevent the coolant from flowing in a reverse direction from the cooling flow path to the first coolant-returning flow path; and
   a second check valve disposed between the condenser and the first coolant-returning flow path and arranged to prevent the coolant from flowing in a reverse direction from the first coolant-returning flow path to the condenser.

2. An apparatus as claimed in claim 1, wherein the cooling apparatus is disposed in a wheel of a vehicle and the condenser is positioned below the cooling flow path as viewed from the vertical direction of the vehicle.

3. An apparatus as claimed in claim 1 or claim 2 comprising a first reservoir tank disposed in the first coolant-returning flow path, the first reservoir tank being arranged to store at least a portion of the coolant.

4. An apparatus as claimed in any preceding claim comprising:

   a second coolant-returning flow path connected in parallel with the first coolant-returning flow path and arranged to return coolant condensed by the condenser to the upstream portion of the cooling flow path;
   a second reservoir tank positioned in the second coolant-returning flow path above the cooling flow path;
   a three-way valve connected to the condenser by a condenser flow path and arranged to selectively switch between the first coolant-returning flow path and the second coolant-returning flow path so as to connect the condenser flow path to the first or second coolant-returning flow paths, respectively, under predetermined conditions;
   an on-off valve provided in the second coolant-returning flow path at a position downstream of the second reservoir tank;
   a temperature detector for detecting a temperature in the cooling flow path; and
   a controller arranged selectively to switch the three-way valve to connect the condenser flow path to the first coolant-returning flow path and open the on-off valve when the temperature detected by the temperature detector is equal to or higher than a preset temperature, and to close the on-off valve when the temperature detected by the temperature detector is lower than the set temperature.

5. An apparatus as claimed in claim 4 comprising a liquid-level detector for detecting a liquid level in the second reservoir tank, wherein when the temperature detected by the temperature detector is lower than the preset temperature, the controller is arranged selectively to switch the three-way valve to connect the condenser to the second coolant-returning flow path if the liquid level detected by the liquid-level detector is lower than a predetermined level and selectively to switch the three-way valve to the first coolant-returning flow path if the liquid level detected by the liquid-level detector is equal to or higher than the predetermined level.

6. An apparatus as claimed in any preceding claim comprising a liquid-coolant supply device arranged to supply the coolant in the liquid phase to a flow path that is positioned between the condenser and the second check valve.

7. An apparatus as claimed in claim 6 wherein the liquid-coolant supply device is arranged to supply the coolant in the liquid phase when the coolant in the flow path positioned between the condenser and the second check valve is in the gas phase.

8. An apparatus as claimed in claim 6 or claim 7 wherein the liquid-coolant supply device includes an auxiliary cooling flow path thermally connected to the heat-generating member and arranged to allow the coolant to pass therethrough;

an auxiliary condenser connected to a downstream portion of the auxiliary cooling flow path and arranged to condense the coolant after the coolant is evaporated in the auxiliary cooling flow path;

an auxiliary coolant-returning flow path that returns the coolant condensed by the auxiliary condenser to an upstream portion of the auxiliary cooling flow path;

a first auxiliary check valve disposed between the auxiliary coolant-returning flow path and the auxiliary cooling flow path and arranged to prevent the coolant from flowing in a reverse direction from the auxiliary cooling flow path to the auxiliary coolant-returning flow path;

a second auxiliary check valve disposed between the auxiliary condenser and the auxiliary coolant-returning flow path and arranged to prevent the coolant from flowing in a reverse direction from the auxiliary coolant-returning flow path to the auxiliary condenser; and

a cylinder that is sectioned by a movable piston into a first cylinder chamber and a second cylinder chamber such that the piston is capable of varying volumes of the first and second cylinder chambers, wherein the first cylinder chamber is connected to the auxiliary cooling flow path and the second cylinder chamber is disposed in the auxiliary coolant-returning flow path.

9.  An apparatus as claimed in claim 8 comprising a flow path that connects the second cylinder chamber to coolant-returning flow path and a third auxiliary check valve that is disposed therein so as to be positioned between the coolant-returning flow path and the second cylinder chamber.

10. An apparatus as claimed in claim 9 wherein the third auxiliary check valve is arranged to be opened to operatively connect the second cylinder chamber to the coolant-returning flow path when the pressure of the auxiliary flow path is greater than the pressure of the coolant-returning flow path.

11. An apparatus as claimed in any of claims 6 to 10 comprising a liquid coolant supply path arranged to connect the liquid-coolant supply device to the coolant-returning flow path and a third check valve disposed in the liquid coolant supply path.

12. An apparatus as claimed in claim 11 comprising a connection structure that connects the liquid coolant supply path downstream of the third check valve to the coolant-returning flow path such that the connection structure is disposed between the second check valve and the condenser.

13. An apparatus as claimed in claim 12 wherein the connection structure comprises a low density member having a through hole disposed therein that is positioned so as to be co-axial with the coolant-returning flow path.

14. A method for cooling a heat-generating member, comprising:

connecting a condenser to a downstream portion of a cooling flow path that contains coolant, wherein the cooling flow path is thermally connected to a heat-generating member and wherein the condenser is arranged to condense the coolant after the coolant is evaporated in the cooling flow path;

connecting a downstream portion of the condenser to an upstream portion of the cooling flow path with a coolant-returning flow path; and

circulating the coolant by alternately opening and closing a first check valve and a second check valve, wherein the first check valve prevents the coolant from flowing in a reverse direction from the cooling flow path to the coolant-returning flow path and the second check valve prevents the coolant from flowing in a reverse direction from the coolant-returning flow path to the condenser.

15. A vehicle having an apparatus or adapted to use a method as claimed in any preceding claim.

FIG. 1

FIG. 2

FIG. 3

FIG. 4

*FIG. 5*

PRESSURE DIFFERENCE
AT CHECK VALVE 19
$\triangle P1=Pin-Pout$

CHECK VALVE 19
OPENED

CHECK VALVE 20
CLOSED

PRESSURE

Pcr

0

TIME

PRESSURE DIFFERENCE
AT CHECK VALVE 20
$\triangle P2=Pcnd-Prt$

*FIG. 6A*

AMOUNT
OF FLOW

AMOUNT OF FLOW AT UPSTREAM
OF CHECK VALVE 19

0

TIME

*FIG. 6B*

FIG. 7

*FIG. 8*

EP 1 819 029 A2

FIG. 9

FIG. 10

FIG. 11

FIG. 12

*FIG. 13*

*FIG. 14*

*FIG. 15*

TEMPERATURE IN FLOW PATH 12d
IN STRUCTURE WITHOUT
SECOND PIPING SYSTEM

TEMPERATURE

GAS PHASE

EVAPORATION
(GAS-LIQUID PHASE)

TEMPERATURE IN FLOW
PATH 12d IN STRUCTURE
OF FIFTH EMBODIMENT

Tsat1

TIME

t1    t2    t3    t4    t5    t6    t7

*FIG. 16A*

TEMPERATURE

TEMPERATURE IN FLOW
PATH 33 IN STRUCTURE OF
FIFTH EMBODIMENT

Tsat2

TIME

t1    t2    t3    t4    t5    t6    t7

START OF EVAPORATION/CONDENSATION
IN STRUCTURE OF SECOND PIPING SYSTEM

*FIG. 16B*

FIG. 17

55

16

F9

XVIIIB

a

*FIG. 18A*

F43

54

55

55a

*FIG. 18B*

**FIG. 19A**

FIG. 19B

## REFERENCES CITED IN THE DESCRIPTION

**Patent documents cited in the description**

- JP 2004112967 A
- JP 2004112968 A
- JP 2006032155 A